# EUROPEAN PATENT SPECIFICATION

(11) **EP 2 990 184 B1**
(45) Date of publication and mention of the grant of the patent: **06.03.2019**
(21) Application number: 15183001.5
(22) Date of filing: 28.08.2015
(51) Int. Cl.: B29C 65/52, B29C 65/78, B29C 65/40, A41H 43/04, D06H 5/00, A41D 27/24

(54) **CLOTH BONDING APPARATUS**
VORRICHTUNG ZUM VERBINDEN VON STOFF
APPAREIL DE LIAISON DE TISSUS

(30) Priority: 28.08.2014 JP 2014173942
(43) Date of publication of application: 02.03.2016
(73) Proprietor: BROTHER KOGYO KABUSHIKI KAISHA, Aichi-ken 467-8561 (JP)
(72) Inventor: MINAGAWA, Yuichiro, Nagoya-shi, Aichi 467-8562 (JP); UMEDA, Kazutoshi, Nagoya-shi, Aichi 467-8562 (JP); IWAKOSHI, Hiroyasu, Nagoya-shi, Aichi 467-8562 (JP); SANO, Toshiyuki, Nagoya-shi, Aichi 467-8562 (JP)
(74) Representative: Prüfer & Partner mbB Patentanwälte · Rechtsanwälte

(56) References cited:
- EP-A1- 2 233 276
- EP-A2- 2 468 123
- WO-A1-01/89812
- US-A1- 2003 010 439

## Description

The present invention relates to a cloth bonding apparatus.

A cloth bonding apparatus is an apparatus that is adapted to bond an upper cloth and a lower cloth together using an adhesive discharged by a nozzle. A cloth bonding apparatus described in Japanese Laid-Open Patent Publication JP 2012-136323 A includes a nozzle, a rotating roller, and a belt. The nozzle discharges a liquefied high-temperature adhesive onto the lower cloth, so the nozzle that discharges the adhesive is at a high temperature. The rotating roller is provided to the rear of the nozzle. The belt faces the nozzle and the rotating roller from below. The belt and the rotating roller hold and feed the upper cloth and the lower cloth to which the adhesive is attached, so that the upper cloth and the lower cloth are bonded together. The lower cloth is below the nozzle. The cloth bonding apparatus lowers the belt when the cloth bonding apparatus temporarily stops the feeding of the upper cloth and the lower cloth. The lower cloth is moved downward and away from the nozzle. The cloth bonding apparatus inhibits any changes in the amount of the adhesive that penetrates the lower cloth due to the transmission of heat to the lower cloth.

### SUMMARY

The lower cloth is lightweight because the lower cloth is a thin cloth or the like, for example. In this case, even when the belt is lowered, the lower cloth may be stuck to the nozzle by the adhesive between the nozzle and the cloth. Within the adhesive that is adhering to the lower cloth, the portion that comes close to the high-temperature nozzle has a higher temperature and a lower viscosity than the rest of the adhesive, so that the adhesive readily penetrates the lower cloth. It is therefore possible that the adhesive force between the upper cloth and the lower cloth is not uniform.

WO 01/89812 A1 and EP 2 468 123 A2 disclose a cloth bonding apparatus according to the preamble of claim 1. EP 2 468 123 A2 also discloses a cloth bonding apparatus according to the preamble of claim 14. Other apparatuses are known from EP 2 233 276 A1 and US 2003/010439 A1.

It is an object of the present invention to provide a cloth bonding apparatus that is capable of reliably moving a cloth away from a nozzle.

A cloth bonding apparatus according to an aspect of the present invention includes a nozzle, a first feed portion, a second feed portion, a feed control portion, and a discharge portion. The nozzle includes a discharge outlet. The nozzle is adapted to discharge an adhesive onto a lower cloth. The first feed portion is provided on a downstream side of the nozzle in a feed direction of the lower cloth. The first feed portion is adapted to feed the upper cloth. The second feed portion is provided on an opposite side of the lower cloth from the nozzle and the first feed portion. The second feed portion is opposed to the nozzle and the first feed portion. The second feed portion is adapted to operate in coordination with the first feed portion to press and feed the upper cloth and the lower cloth to which the adhesive is attached. The feed control portion is adapted to control feeding of the upper cloth and the lower cloth by the first feed portion and the second feed portion. The discharge portion is provided on an opposite side of the lower cloth from the second feed portion. The discharge portion is coupled to a supply portion that is adapted to supply a gas. The discharge portion is adapted to discharge, onto the lower cloth, the gas supplied by the supply portion. The first feed portion and the second feed portion feed the upper cloth and the lower cloth. The nozzle discharges the adhesive and the adhesive is attached to the lower cloth. The gas discharged by the discharge portion pushes the lower cloth toward the second feed portion. The lower cloth is moved away from the nozzle. The cloth bonding apparatus can reliably move the lower cloth away from the nozzle.

In the cloth bonding apparatus, the discharge portion may be provided on at least one of an upstream side and a downstream side of the discharge outlet of the nozzle in the feed direction. The discharge portion may include a pipe member that includes a flow passage and a first discharge outlet. The flow passage may be adapted such that the gas supplied by the supply portion can flow through the flow passage. The first discharge outlet may be connected to the flow passage. The first discharge outlet may be adapted to discharge the gas onto the lower cloth. In this case, the discharge portion can discharge, from the first discharge outlet onto the cloth, the gas that flows through the pipe member. The flow passage for the gas is formed in the pipe member, so that the pipe member can be made compact. The pipe member does not readily interfere with the feeding of the upper cloth and the lower cloth. The cloth bonding apparatus can perform stable feeding of the upper cloth and the lower cloth.

In the cloth bonding apparatus, the first discharge outlet may be formed in a peripheral wall portion of the pipe member. The discharge portion may include a support portion that supports the pipe member such that the pipe member can rotate around an axis of the pipe member. An orientation of an opening in the first discharge outlet may be changed by rotating of the pipe member around the axis of the pipe member. In this case, the direction in which the discharge portion discharges the gas from the first discharge outlet changes as the pipe member is rotated around the axis of the pipe member. The cloth bonding apparatus can easily change the direction in which the gas is discharged. The direction in which the discharge portion discharges the gas is changed by adjusting the orientation of the opening in the first discharge outlet. The cloth bonding apparatus can discharge the gas in a direction that is appropriate for easily moving the lower cloth away from the nozzle, in accordance with the type of the lower cloth. The cloth bonding apparatus can more reliably move the lower cloth away from the nozzle.

In the cloth bonding apparatus, the nozzle may extend in a direction that intersects the feed direction. The support portion may support the pipe member such that the pipe member can be moved parallel to a direction in which the nozzle extends. In this case, the moving of the pipe member parallel to the direction in which the nozzle extends makes it possible for the pipe member to discharge the gas at a position that is appropriate for easily moving the lower cloth away from the nozzle, in accordance with the type of the lower cloth. The cloth bonding apparatus can more reliably move the lower cloth away from the nozzle.

In the cloth bonding apparatus, the pipe member may be provided on the downstream side of the discharge outlet of the nozzle in the feed direction. When the discharge portion discharges air, a wrinkle may form in the lower cloth. In this case, the wrinkle tends to move upstream from the pipe member in the feed direction. The wrinkle in the lower cloth tends not to move into the area between the first feed portion and the second feed portion. The wrinkle therefore tends not to be formed in the lower cloth.

In the cloth bonding apparatus, the pipe member may be provided on each of the upstream side and the downstream side of the discharge outlet of the nozzle in the feed direction. In this case, the flow volume of the gas that the discharge portion discharges onto the lower cloth is greater than when the pipe member is provided on only one of the upstream side and the downstream side of the nozzle in the feed direction. The cloth bonding apparatus can more reliably move the lower cloth away from the nozzle.

In the cloth bonding apparatus, the first discharge outlet may be a rectangular opening whose long axis extends in an axial direction of the pipe member. In this case, the first discharge outlet can be easily formed in the pipe member. The cloth bonding apparatus can simplify the manufacturing process for the pipe member.

In the cloth bonding apparatus, a plurality of the first discharge outlets may be arrayed in an axial direction of the pipe member. Each of the plurality of the first discharge outlets may be a circular opening. In this case, it is possible to inhibit the pressure inside the pipe member from diminishing toward the downstream end of the flow passage for the gas. The cloth bonding apparatus can make the flow volume of the gas that the first discharge outlet discharges uniform along the axial direction of the pipe member.

In the cloth bonding apparatus, the discharge portion may include a flow passage and a second discharge outlet. The flow passage may be provided in an interior of the nozzle. The flow passage may be adapted such that the gas supplied by the supply portion can flow through the flow passage. The second discharge outlet may be provided in the nozzle. The second discharge outlet may be adapted to discharge, onto the lower cloth, the gas that flows through the flow passage. In this case, the flow passage for the gas is formed in the interior of the nozzle. When the lower cloth is fed, the lower cloth tends not to interfere with the flow passage. The cloth bonding apparatus can stabilize the feeding of the lower cloth.

The cloth bonding apparatus may further include a moving portion and a discharge control portion. The moving portion may be adapted to move the second feed portion between a clamping position and a spacing position. The clamping position may be a position where the nozzle and the second feed portion hold the lower cloth between the nozzle and the second feed portion. The spacing position may be a position where the second feed portion is separated from the nozzle. The discharge control portion may be adapted to control the discharge portion to discharge the gas onto the lower cloth after the feed control portion causes the feeding of the lower cloth to stop. The discharge control portion may be adapted to control the discharge portion to discharge the gas onto the lower cloth when the moving portion moves the second feed portion from the clamping position to the spacing position. In this case, the gas pushes the lower cloth toward the second feed portion. The cloth bonding apparatus can more reliably move the lower cloth, for which the feeding is stopped, away from the nozzle.

The cloth bonding apparatus may further include a time control portion adapted to set a discharge start delay time and a discharge duration time. The discharge start delay time may be a length of time from when the moving portion finishes moving the second feed portion from the clamping position to the spacing position until the discharge control portion starts discharge of the gas by the discharge portion. The discharge duration time may be a length of time from when the discharge portion starts to discharge the gas until the discharge portion stops discharging the gas. In this case, the cloth bonding apparatus can start the discharge of the gas at a time that is appropriate for easily moving the lower cloth away from the nozzle, in accordance with the type of the lower cloth. The cloth bonding apparatus can more reliably move the lower cloth, for which the feeding is stopped, away from the nozzle.

In the cloth bonding apparatus, the discharge portion may include a flow volume regulating portion that is adapted to regulate flow volume of the gas to be discharged. In this case, the cloth bonding apparatus can discharge the gas at a flow volume that is appropriate for easily moving the lower cloth away from the nozzle, in accordance with the type of the lower cloth. The cloth bonding apparatus can reliably move the lower cloth farther away from the nozzle.

In the cloth bonding apparatus, the discharge portion may include a heating portion that is adapted to heat the gas to be discharged. In this case, the discharge portion can discharge, onto the lower cloth to which the adhesive is attached, the gas heated by the heating portion. The adhesive can reach a high temperature. Therefore, the adhesive can easily penetrate the lower cloth, even when the lower cloth is waterproof. The cloth bonding apparatus can cause the adhesive to penetrate the lower cloth to an appropriate degree, even when the lower cloth is waterproof.

A cloth bonding apparatus according to another aspect of the present invention includes a nozzle, a first feed portion, a second feed portion, a moving portion, and a movable member. The nozzle is adapted to discharge an adhesive onto a lower cloth. The first feed portion is provided on a downstream side of the nozzle in a feed direction of the lower cloth. The second feed portion is provided on an opposite side of the lower cloth from the nozzle and the first feed portion. The second feed portion is opposed to the nozzle and the first feed portion. The second feed portion is adapted to operate in coordination with the first feed portion to feed an upper cloth and the lower cloth to which the adhesive is attached. The moving portion is adapted to move the second feed portion between a clamping position and a spacing position. The clamping position is a position where the nozzle and the second feed portion hold the lower cloth between the nozzle and the second feed portion. The spacing position is a position where the second feed portion is separated from the nozzle. The movable member is provided on an opposite side of the lower cloth from the second feed portion. The movable member is adapted to move in conjunction with moving of the second feed portion by the moving portion. The lower cloth is moved away from the nozzle by the movable member when the second feed portion is moved from the clamping position to the spacing position. By moving in conjunction with the second feed portion, the movable member can press the lower cloth in the direction that moves the lower cloth away from the nozzle. Thus, the lower cloth can be moves away from the nozzle. The cloth bonding apparatus can reliably move the lower cloth away from the nozzle.

### BRIEF DESCRIPTION OF THE DRAWINGS

Embodiments will be described below in detail with reference to the accompanying drawings in which:
FIG. 1 is an oblique view of a rear side of a cloth bonding apparatus 1;
FIG. 2 is an oblique view of a front side of the cloth bonding apparatus 1;
FIG. 3 is an enlarged oblique view of an area around a nozzle 17;
FIG. 4 is a right side view of a lower feed mechanism 12;
FIG. 5 is a bottom view of the nozzle 17;
FIG. 6 is an electrical block diagram of the cloth bonding apparatus 1;
FIG. 7 is a data configuration diagram of a data table 150;
FIG. 8 is a flowchart of cloth bond processing;
FIG. 9 is a right side view of the lower feed mechanism 12 feeding an upper cloth 31 and a lower cloth 32;
FIG. 10 is a flowchart of air discharge processing;
FIG. 11 is a right side view of the lower feed mechanism 12 with a belt 27 positioned at a spacing position;
FIG. 12 is an enlarged view of the area around the nozzle 17 in FIG. 11;
FIG. 13 is an oblique view of a valve 180 in a modified example;
FIG. 14 is an oblique view of an air discharge mechanism 101 in a modified example;
FIG. 15 is an oblique view of an air discharge mechanism 102 in a modified example;
FIG. 16 is an oblique view of an air discharge mechanism 103 in a modified example;
FIG. 17 is an oblique view of an air discharge mechanism 104 in a modified example;
FIG. 18 is an oblique view of an area around a nozzle 317 of a cloth bonding apparatus 11 in a modified example; and
FIG. 19 is a right side view of a contact portion 302 that moves downward together with the belt 27.

### DETAILED DESCRIPTION

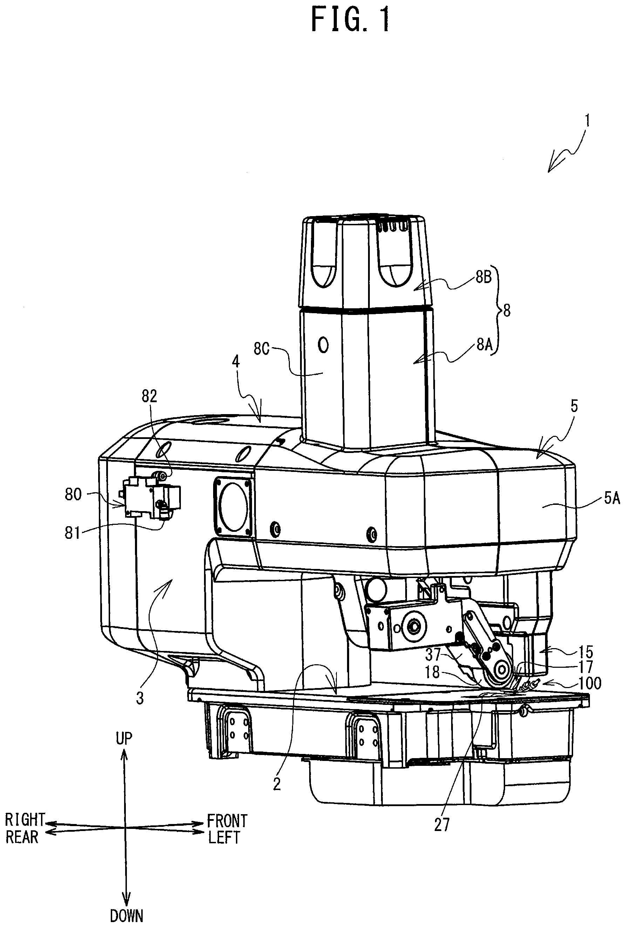

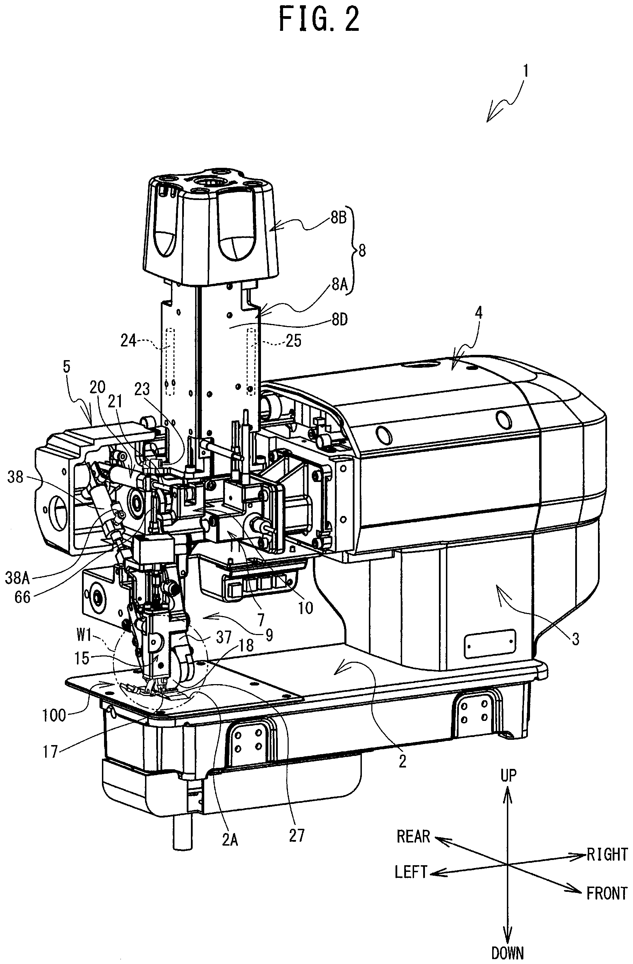

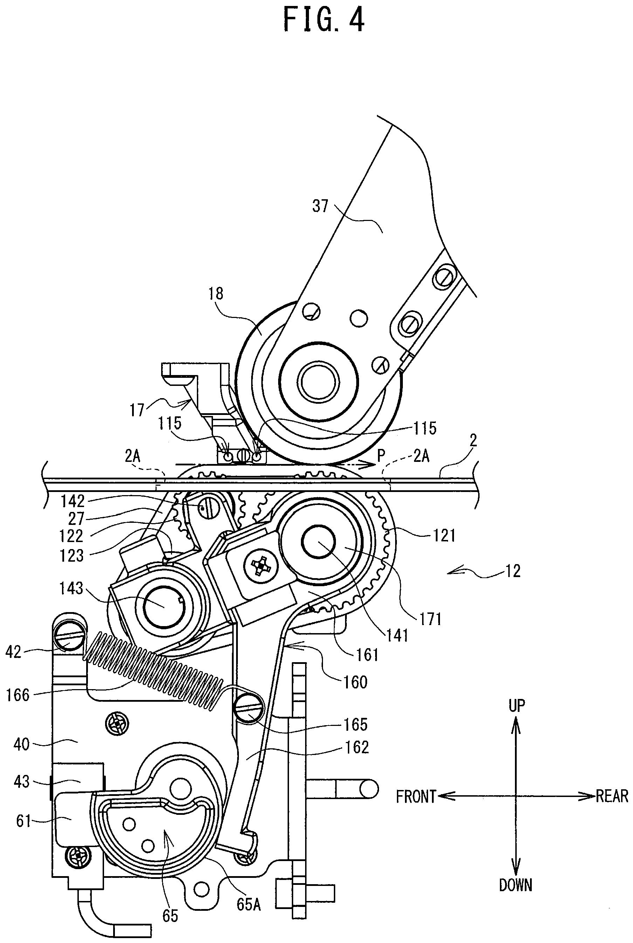

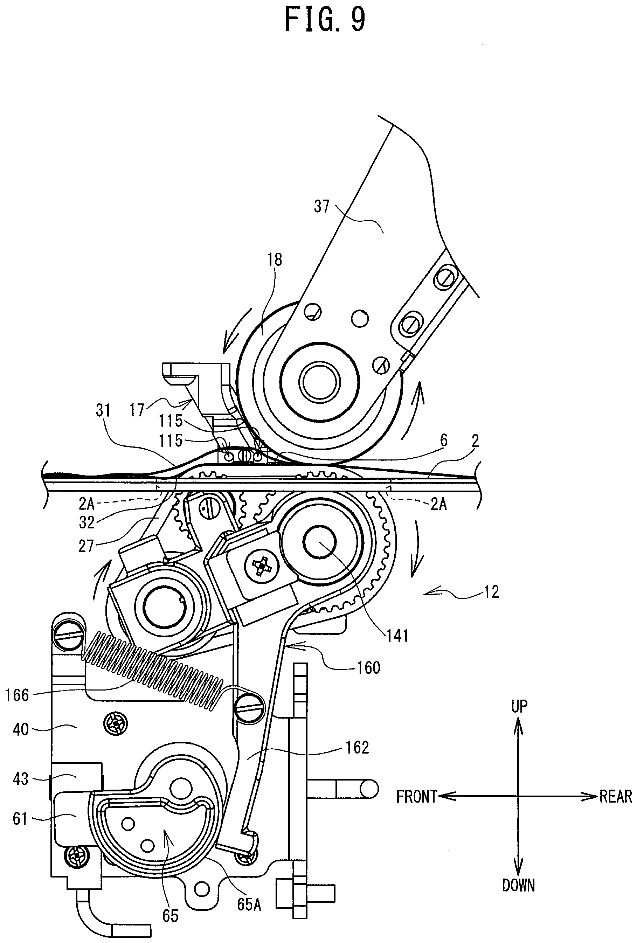

Hereinafter, an embodiment of the present invention will be explained with reference to the drawings. The explanation that follows uses the up-down direction, the left-right direction, and the front-rear direction that are indicated by arrows in the drawings. As shown in FIG. 9, a cloth bonding apparatus 1 is an apparatus that is adapted to bond an upper cloth 31 and a lower cloth 32 together using an adhesive 6. The cloth bonding apparatus 1 bonds the upper cloth 31 and the lower cloth 32 together by pressing and feeding the upper cloth 31 and the lower cloth 32. In the present embodiment, the direction in which the upper cloth 31 and the lower cloth 32 are fed when the upper cloth 31 and the lower cloth 32 are bonded (hereinafter called the feed direction) is the direction from the front side of the cloth bonding apparatus 1 toward the rear side (the direction of an arrow P in FIG. 4). In FIG. 2, a cover 5A (refer to FIG. 1) and a cover 8C (refer to FIG. 1) are omitted.

The external structure of the cloth bonding apparatus 1 will be explained with reference to FIGS. 1 and 2. The cloth bonding apparatus 1 includes a base 2, a pillar 3, an arm 4, and a head 5. The base 2 has a substantially rectangular three-dimensional shape. The pillar 3 extends vertically upward from the right end of the base 2. The arm 4 is connected to the upper end of the pillar 3 and projects toward the left from the left side face of the pillar 3. The head 5 is provided on the left end of the arm 4 and has a substantially rectangular three-dimensional shape that projects farther toward the left. The base 2 is a foundation that supports the pillar 3. The base 2 is provided with a belt opening 2A that is substantially rectangular in a plan view. A belt 27 is disposed inside the belt opening 2A. The head 5 includes the cover 5A, which can be mounted and removed. On its bottom side, the head 5 is provided with an upper roller 18 and a nozzle 17. The upper roller 18 and the nozzle 17 can contact with the belt 27 from above. The nozzle 17 is positioned upstream in the feed direction from the position where the upper roller 18 and the belt 27 come into contact (refer to FIG. 4). The nozzle 17 discharges the adhesive 6 onto the lower cloth 32.

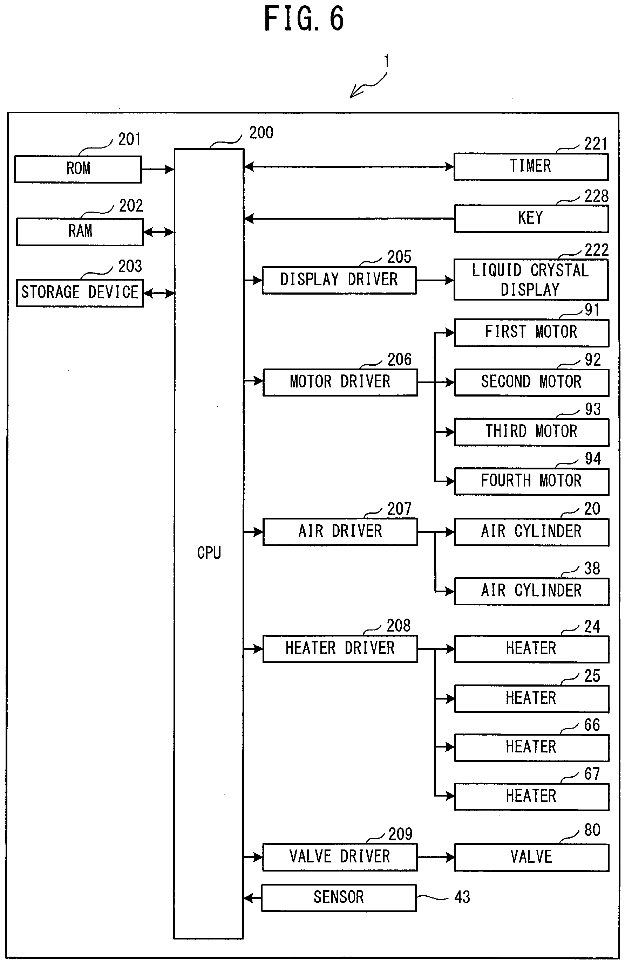

The base 2 is affixed to a mounting opening in the top of a work bench. The cloth bonding apparatus 1 is disposed on top of the work bench. The work bench is provided with an operation panel on its top face. The operation panel includes a key 228 (refer to FIG. 6) and a liquid crystal display 222 (refer to FIG. 6). An operator may set various types of operations of the cloth bonding apparatus 1 by pressing the key 228 while looking at the liquid crystal display 222.

The structure of the head 5 and the internal structure of the cloth bonding apparatus 1 will be explained with reference to FIGS. 2 to 5. The head 5 supports a pump 7, a reservoir 8, an upper feed mechanism 9, a nozzle swinging mechanism 10, and the like inside the cover 5A (refer to FIG. 1). The pump 7 is provided in the right front portion of the head 5. The pump 7 includes a supply passage, a gear pump, a first motor 91 (refer to FIG. 6), and the like. The supply passage guides the adhesive 6 from the reservoir 8 to the gear pump. The gear pump is adapted to supply an appropriate amount of the adhesive 6 to the nozzle 17 with high precision. The first motor 91 is provided in the interior of the arm 4. The first motor 91 drives the gear pump.

The reservoir 8 is provided to the rear of the pump 7. The reservoir 8 has a substantially rectangular three-dimensional shape and extends upward from the center of the top face of the head 5. The reservoir 8 includes a body 8A and a lid 8B. The body 8A includes the cover 8C (refer to FIG. 1) and a reservoir chamber 8D. The cover 8C has a square cylindrical shape and covers the outer side of the reservoir chamber 8D. The reservoir chamber 8D is a cylinder that is open at the top and closed at the bottom. The reservoir chamber 8D stores the adhesive 6 (refer to FIG. 9) in a container portion in its interior. The adhesive 6 stored in the container portion of the reservoir chamber 8 is supplied to the nozzle 17 as necessary, through the gear pump. The adhesive 6 is a hot-melt adhesive that liquefies when heated to a specified temperature and hardens at a temperature that is lower than the specified temperature. The reservoir chamber 8D is provided with heaters 24, 25 on the left and right sides of container portion, respectively. The heaters 24, 25 warm the container portion. The adhesive 6 is therefore liquefied by melting.

The lid 8B is removably provided on the top of the reservoir chamber 8D. The lid 8B opens and closes an opening in the top of the reservoir chamber 8D. The operator can secure the lid 8B to the top of the reservoir chamber 8D by performing a rotating operation that tightens the lid 8B. The operator can remove the lid 8B from the top of the reservoir chamber 8D by performing a rotating operation that loosens the lid 8B. The shape of the lid 8B and the opening and closing structure of the opening in the top of the reservoir chamber 8D may have other shapes. For example, the reservoir 8 may be provided with a shaft on one edge of the opening in the top of the reservoir chamber 8D, and the shaft may support a plate-shaped lid such that the cover can open and close.

The upper feed mechanism 9 is provided on the bottom side and in the interior of the head 5. The upper feed mechanism 9 includes a support portion 37, an air cylinder 38, the upper roller 18, a second motor 92 (refer to FIG. 6), and the like. The support portion 37 rotatably supports the upper roller 18 below the head 5. The front side of the support portion 37 extends obliquely downward toward the front. The lower portion of the head 5 rotatably supports the rear edge of the support portion 37. The air cylinder 38 is provided in the interior of the head 5. The air cylinder 38 is provided with an air inlet 38A. A breather hose is connected to the air inlet 38A. The cloth bonding apparatus 1 controls the intake of compressed air from the breather hose to the air inlet 38A and the exhaust of the compressed air. A piston in the interior of the air cylinder 38 is moved by the control of the air intake and exhaust. The piston includes a movable portion on its lower end. The movable portion is connected to the top of the support portion 37. When the piston moves, the movement is transmitted through the movable portion, causing the front end of the support portion 37 to swing downward. The upper roller 18 and the belt 27 maintain the state of being in contact. The second motor 92 (refer to FIG. 6) is provided in the interior of the arm 4, to the right of the reservoir chamber 8D. The second motor 92 is positioned to the rear of the first motor 91 (refer to FIG. 6). The second motor 92 rotates the upper roller 18 through a plurality of pulleys, belts, and the like that are provided in the interior of the support portion 37.

The nozzle swinging mechanism 10 is provided on the left side of the upper portion and the left side of the front portion of the head 5. The nozzle swinging mechanism 10 includes a nozzle lever 15, the nozzle 17, an air cylinder 20, and the like. The nozzle lever 15 extends downward from above on the left side of the front portion of the head 5. The nozzle lever 15 is adapted to swing toward the front and the rear around an axis of rotation. The axis of rotation is provided slightly below the upper end of the nozzle lever 15. A supply passage is provided in the interior of the nozzle lever 15. The supply passage guides the adhesive 6 from the pump 7 to the nozzle 17. The nozzle lever 15 is provided with a heater 66 close to the supply passage. The nozzle 17 is provided on the bottom end of the nozzle lever 15. The nozzle 17 extends downward from the bottom end of the nozzle lever 15, then bends and extends toward the right along the cloths.

The air cylinder 20 is provided on the left side of the upper portion of the head 5 and on the downstream side of the nozzle lever 15 in the feed direction. The air cylinder 20 includes an air inlet 23. A breather hose is connected to the air inlet 23. The cloth bonding apparatus 1 controls the intake of compressed air from the breather hose to the air inlet 23 and the exhaust of the compressed air. A piston in the interior of the air cylinder 20 is moved by the control of the air intake and exhaust. A rod-shaped movable portion 21 extends in the front-rear direction and is connected to the piston. When the piston moves, the movable portion 21 moves in the front-rear direction. The tip of the movable portion 21 is connected to the upper end of the nozzle lever 15.

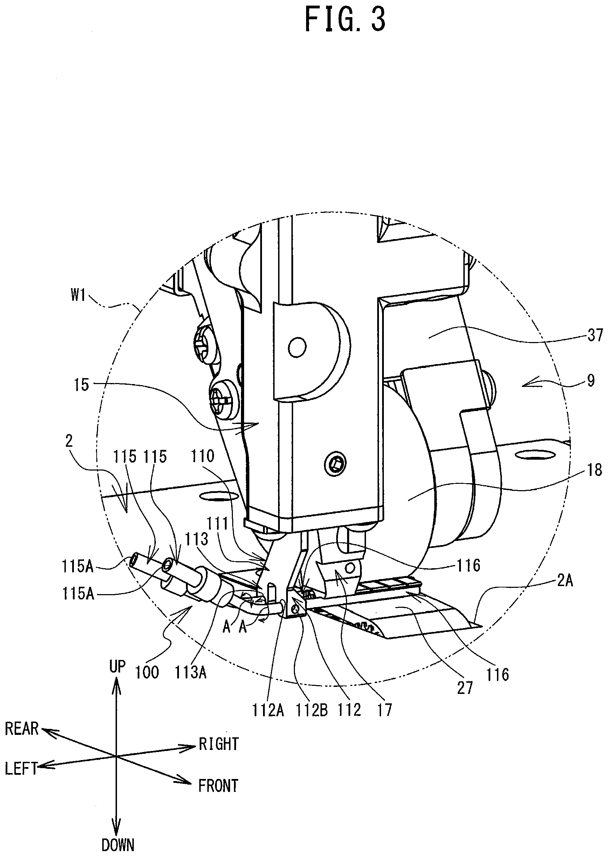

When the movable portion 21 is moved toward the front by the drive of the air cylinder 20, the nozzle lever 15 swings significantly around the axis of rotation, and the nozzle 17 moves to a proximate position (refer to FIG. 3). The proximate position is a position where the nozzle 17 is close to the base 2 from above. The nozzle 17 is in the proximate position when the operator performs a bonding operation on the cloths. When the movable portion 21 is moved toward the rear by the drive of the air cylinder 20, the nozzle lever 15 swings significantly around the axis of rotation, and the nozzle 17 moves to a retracted position. The retracted position is a position where the nozzle 17 is significantly separated upward from the base 2. The nozzle 17 is in the retracted position when the operator performs maintenance or the like on the nozzle 17.

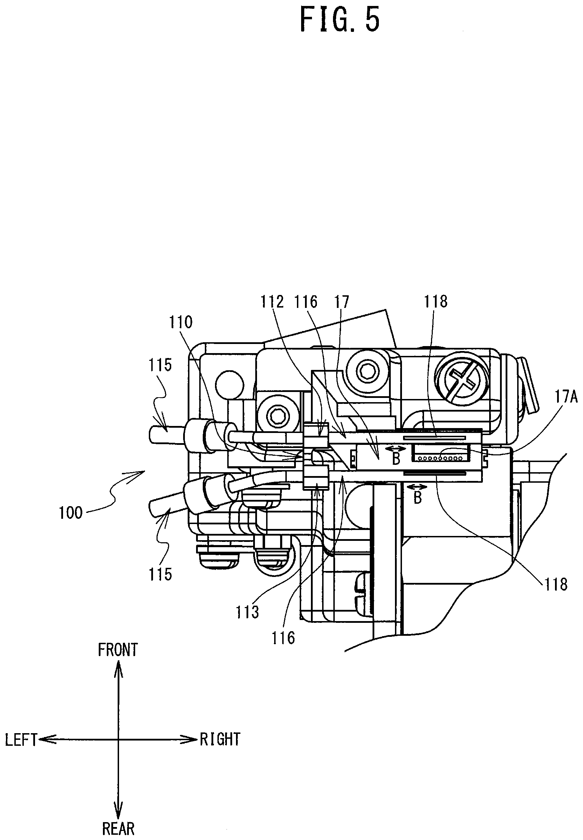

The nozzle 17 is substantially rod-shaped. The nozzle 17 is provided with a plurality of discharge outlets 17A on its bottom side (refer to FIG. 5). The discharge outlets 17A are holes through which the adhesive 6 is discharged. As shown in FIG. 9, when the operator performs the bonding operation on the upper cloth 31 and the lower cloth 32, the cloth bonding apparatus 1 swings the nozzle lever 15 to move the nozzle 17 to the proximate position. The discharge outlets 17A are opposed to the belt 27. The operator may place the lower cloth 32 between the nozzle 17 and the belt 27 and may place the upper cloth 31 on the top face of the nozzle 17. The pump 7 supplies the adhesive 6 to the nozzle 17 through the supply passage in the interior of the nozzle lever 15. The nozzle 17 discharges the adhesive 6 onto the top face of the lower cloth 32 from the discharge outlets 17A.

A lower feed mechanism 12 in the interior of the base 2 will be explained with reference to FIG. 4. The lower feed mechanism 12 includes a frame 40, a sensor 43, a third motor 93 (refer to FIG. 6), a cam 65, a fourth motor 94 (refer to FIG. 6), the belt 27, a support arm 160, and the like.

The frame 40 is provided on the left side of the interior of the base 2. The frame 40 has a plate shape that includes a surface that extends in the up-down direction and the left-right direction. The frame 40 is provided with an attaching portion 42 in the upper portion of its right face. The attaching portion 42 has a rod shape that extends in the left-right direction.

The third motor 93 is affixed to the left face of the frame 40. An output shaft of the third motor 93 passes through the frame 40 and projects to the right. The cam 65 is affixed to the tip of the output shaft of the third motor 93. The cam 65 has a substantially circular cylindrical shape and is adapted to rotate together with the output shaft of the third motor 93. The cam 65 includes a sliding portion 65A and a detection plate 61. The sliding portion 65A forms the outer circumference of the cam 65. The sliding portion 65A extends such that its distance from the center of rotation of the cam 65 increases gradually in the clockwise direction in a right side view. The detection plate 61 is formed in the portion of the sliding portion 65A where the distance from the center of rotation of the cam 65 is the greatest.

The sensor 43 is provided on the lower part of the right face of the frame 40. The sensor 43 is adapted to detect the detection plate 61. When the sensor 43 detects the detection plate 61, the output shaft of the third motor 93 is at an origin position. The fourth motor 94 is provided in the right rear portion of the interior of the base 2. The fourth motor 94 is coupled to a rotating shaft 141 through a pulley and a belt. The rotating shaft 141 extends in the left-right direction above and to the rear of the frame 40. The rotating shaft 141 rotates by being driven by the fourth motor 94. The rotating shaft 141 is inserted through insertion holes in two bearings 171. The two bearings 171 are arrayed in the left-right direction. Of the two bearings 171, FIG. 4 shows only the bearing 171 on the right side.

The support arm 160 holds the outer circumferential portions of the bearings 171. The support arm 160 is adapted to pivot around the rotating shaft 141 independently of the rotation of the rotating shaft 141. The support arm 160 includes a support plate 161 and a contact portion 162. The support plate 161 rotatably supports rotating shafts 142 and 143. The rotating shafts 142 and 143 extend in the left-right direction in positions that are toward the front from the rotating shaft 141. The rotating shaft 143 is positioned farther toward the front than is the rotating shaft 142.

The rotating shaft 141 supports a first pulley 121, the rotating shaft 142 supports a second pulley 122, and the rotating shaft 143 supports a third pulley 123. The top of the first pulley 121 and the top of the second pulley 122 are positioned at substantially the same height.

The belt 27 is provided around the first pulley 121, the second pulley 122, and the third pulley 123. The portion of the belt 27 that extends between the top of the first pulley 121 and the top of the second pulley 122 (hereinafter called the top portion of the belt 27) is exposed on its upper side through the belt opening 2A and extends in the front-rear direction. The top portion of the belt 27 is opposed to the nozzle 17. The front part of the top portion of the belt 27 contacts from below with the nozzle 17, which is in the proximate position. The rear part of the top portion of the belt 27 contacts from below with the upper roller 18. The rotating of the rotating shaft 141 by the fourth motor 94 drives the belt 27 through the first pulley 121, the second pulley 122, and the third pulley 123.

The contact portion 162 extends downward from the support plate 161. The contact portion 162 is provided with an attaching portion 165. The attaching portion 165 is positioned lower than the attaching portion 42. The attaching portion 165 has a rod shape that extends in the left-right direction. A spring 166 attaches the attaching portion 165 to the attaching portion 42 of the frame 40. The spring 166 may be a tension spring, for example. The spring 166 urges the support arm 160 in the clockwise direction around the rotating shaft 141 in a right side view. The contact portion 162 contacts with the sliding portion 65A.

A pivot position of the support arm 160 will be explained. The rotation of the cam 65 when driven by the third motor 93 causes the sliding portion 65A to slide in relation to the contact portion 162. As the part of the sliding portion 65A that is in contact with the contact portion 162 changes, the position of the contact portion 162 shifts in the front-rear direction. The support arm 160 pivots around the rotating shaft 141 together with the second pulley 122 and the third pulley 123. The belt 27 therefore pivots together with the support arm 160 while remaining in contact with the upper roller 18.

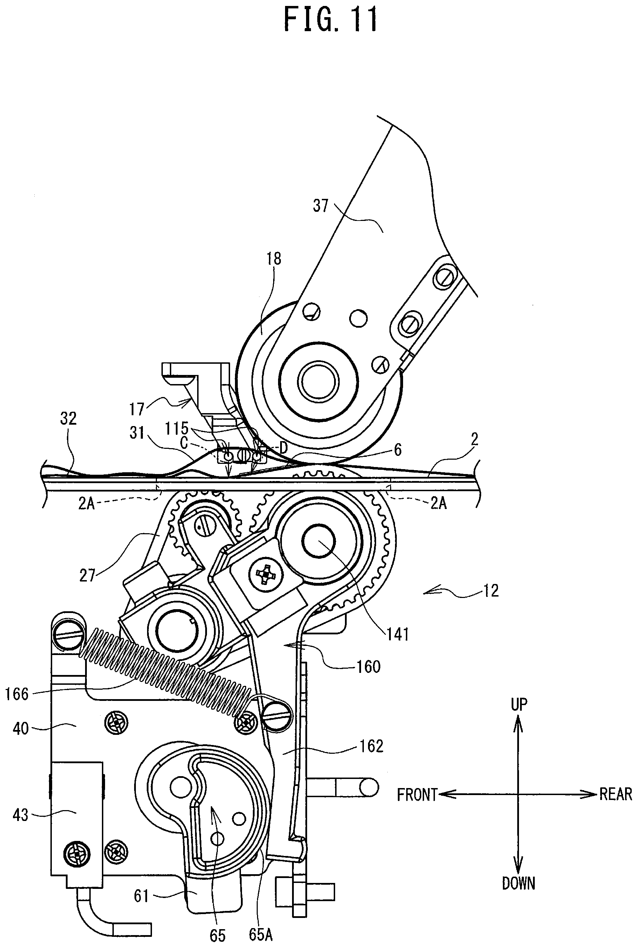

The support arm 160 is adapted to pivot between a first position (refer to FIG. 9) and a second position (refer to FIG. 11). The first position is a position where the lower cloth 32 (refer to FIG. 9) is held between the top portion of the belt 27 and the nozzle 17. The second position is a position where the top portion of the belt 27 is separated downward from the nozzle 17. Hereinafter, the position of the belt 27 when the support arm 160 is in the first position will be called a clamping position, and the position of the belt 27 when the support arm 160 is in the second position will be called a spacing position. The clamping position and the spacing position are pivot positions of the belt 27 when the output shaft of the third motor 93 has rotated from the origin position by corresponding specified amounts.

An air discharge mechanism 100 will be explained with reference to FIG. 1 and FIGS. 3 to 5. The air discharge mechanism 100 includes a valve 80, a heater 67 (refer to FIG. 6), a support member 110, two pipe members 115, and the like. The air discharge mechanism 100 is a mechanism that is adapted to discharge air toward the lower cloth 32 (refer to FIG. 9) from the two pipe members 115.

The valve 80 is provided in the upper part of the rear face of the arm 4. The valve 80 may be an electromagnetic valve, for example. The valve 80 includes an inlet 81, an outlet 82, and an internal flow passage. The inlet 81 is connected to an air compressor through pipework. The air compressor is adapted to deliver air to the valve 80 through pipework. The air compressor is equivalent to supply means of the present invention. The structure that delivers air to the valve 80 may be an air cylinder, instead of the air compressor. The outlet 82 is connected to the two pipe members 115 through a supply pipe.

The internal flow passage is continuous with the inlet 81 and the outlet 82. The valve 80 switches the internal flow passage between open and closed states in response to commands from a CPU 200 (refer to FIG. 6). When the valve 80 is on, the valve 80 opens the internal flow passage, and when the valve 80 is off, the valve 80 closes the internal flow passage.

The heater 67 is provided on the rear side of the head 5. By generating heat, the heater 67 is adapted to heat the air that flows inside the supply pipe.

The support member 110 supports the two pipe members 115 such that the two pipe members 115 can rotate in the vicinity of the nozzle 17. The support member 110 is substantially rectangular in a left side view. The support member 110 includes an extending portion 111, a front support portion 112, and a rear support portion 113. The extending portion 111 is plate-shaped member that extends downward from the left side of the lower end of the nozzle lever 15. The front support portion 112 and the rear support portion 113 are members that extend farther downward from the lower end of the extending portion 111. The front support portion 112 and the rear support portion 113 respectively support the two pipe members 115. The front support portion 112 is positioned on the front side of the nozzle 17. The rear support portion 113 is positioned on the rear side of the nozzle 17. The front support portion 112 and the rear support portion 113 each have a substantially rectangular three-dimensional shape. The front support portion 112 includes a through-hole 112A that extends in the left-right direction. The rear support portion 113 includes a through-hole 113A that extends in the left-right direction. The through-holes 112A and 113A are round holes. The two pipe members 115 are respectively inserted into the through-holes 112A and 113A. The two pipe members 115 respectively extend obliquely downward toward the nozzle 17 from the left side of the nozzle lever 15, bend on the left side of the support member 110, are inserted through the through-holes 112A and 113A, and extend substantially horizontally toward the right. Each of the two pipe members 115 includes a flow passage 115A on its inner side. The air that the air compressor supplies flows through the flow passages 115A. Each of the pipe members 115 is provided with a discharge portion 116. The discharge portions 116 are portions that extend substantially horizontally to the right of the support member 110 for the pipe members 115. The discharge portion 116 that extends to the right from the through-hole 112A is positioned on the upstream side of the discharge outlet 17A of the nozzle 17 in the feed direction. The discharge portion 116 that extends to the right from the through-hole 113A is positioned between the upper roller 18 and the discharge outlet 17A of the nozzle 17, that is, on the downstream side of the discharge outlet 17A of the nozzle 17 in the feed direction.

Air discharge outlets 118 are provided in the bottoms of peripheral wall portions of the discharge portions 116. The air discharge outlets 118 are positioned close to the nozzle 17. The air discharge outlets 118 are substantially rectangular, with their long axes extending in the left-right direction in a bottom view. The air discharge outlets 118 are continuous with the flow passages 115A of the corresponding pipe members 115. The air compressor supplies air to the pipe members 115 through the valve 80 and the supply pipe. The air supplied by the air compressor is discharged from the air discharge outlets 118 toward the lower cloth 32 (refer to FIG. 9). The lengths of the air discharge outlets 118 in the left-right direction are opening widths that the air discharge outlets 118 open up in the pipe members 115.

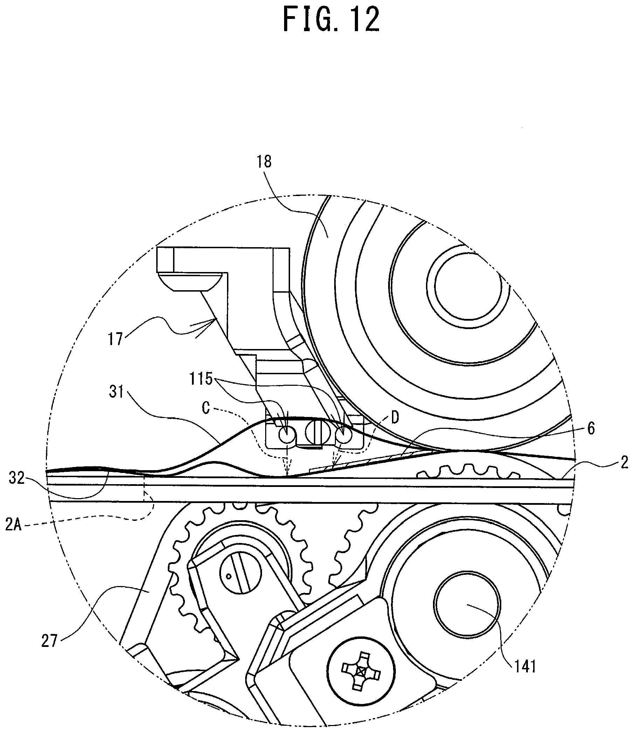

A threaded hole 112B is provided in a front wall portion of the front support portion 112. The threaded hole 112B is continuous with and intersects the through-hole 112A at right angle. A threaded hole is provided in a rear wall portion of the rear support portion 113. The threaded hole in the rear support portion 113 is continuous with and intersects the through-hole 113A at right angle. The operator may tighten two screws into the threaded hole 112B of the front support portion 112 and the threaded hole of the rear support portion 113, respectively. Of the two screws, the tip of one screw presses against a peripheral wall portion of the pipe member 115 inserted into the through-hole 112A, while the tip of the other screw presses against a peripheral wall portion of the pipe member 115 inserted into the through-hole 113A. The tightening of the two screws into the threaded holes makes it possible for the front support portion 112 and the rear support portion 113 to fix the positions of the corresponding pipe members 115. When the operator loosens the two screws tightened into the threaded holes, the tips of the screws move away from the wall portions of the pipe members 115. The two pipe members 115 can then be rotated around their axes (in the directions of arrows A) while still inserted into the corresponding through-holes 112A and 113A. Rotating the pipe members 115 around their respective axes changes the orientations of the openings in the air discharge outlets 118. The pipe member 115 inserted into the through-hole 112A may discharge the air downward (in the direction of an arrow C in FIG. 12), for example. The pipe member 115 inserted into the through-hole 113A may discharge the air obliquely downward toward the front (in the direction of an arrow D in FIG. 12), for example. The two pipe members 115 can also be moved in the left-right direction (the direction of an arrow B in FIG. 5) while still inserted into the corresponding through-holes 112A and 113A. Moving each of the pipe members 115 in the left-right direction shifts the position of the corresponding air discharge outlet 118 in the left-right direction. When the operator loosens the two screws tightened into the threaded holes, the two pipe members 115 can be disconnected from the support member 110 and the supply pipe. The operator may take pipe members that have opening widths that are different from the opening widths of the air discharge outlets 118 and attach those pipe members to the front support portion 112, the rear support portion 113, and the supply pipe.

An electrical configuration of the cloth bonding apparatus 1 will be explained with reference to FIG. 6. The cloth bonding apparatus 1 includes the CPU 200, a ROM 201, a RAM 202, and a storage device 203. The CPU 200 performs receiving processing and control processing. The receiving processing is processing that receives input information from a timer 221, the key 228, and the like. The control processing is processing that controls the first motor 91 and the like. The CPU 200 is electrically connected to the ROM 201, the RAM 202, and the storage device 203.

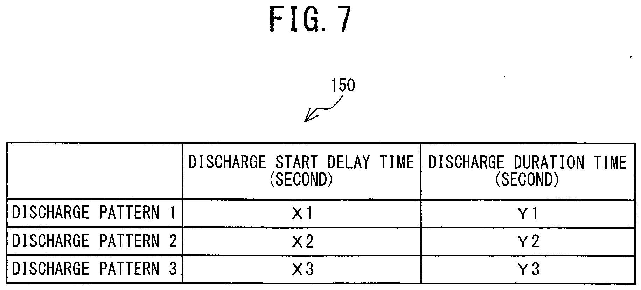

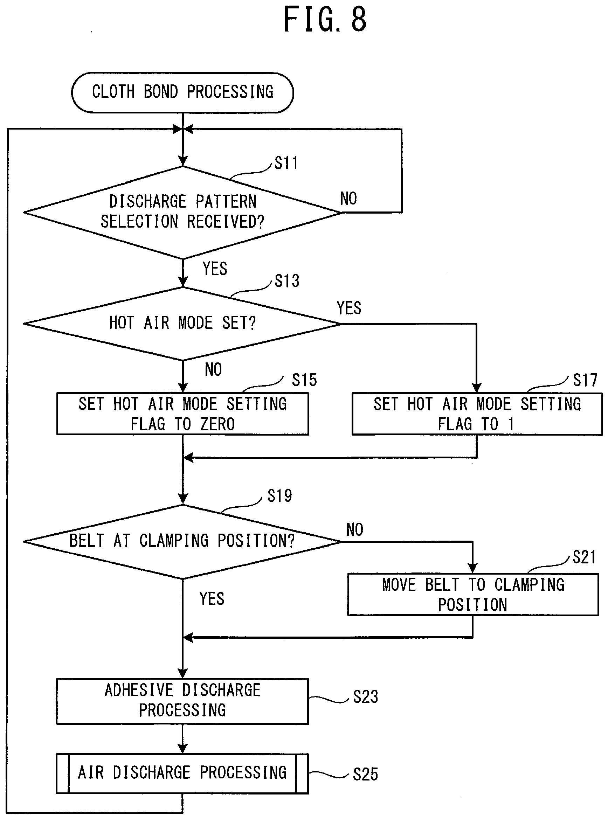

The ROM 201 stores a program that the CPU 200 executes, various types of initial setting parameters, and the like. The ROM 201 stores a program for the CPU 200 to perform cloth bond processing (refer to FIG. 8). The RAM 202 temporarily stores a timer value, a counter value, a flag, and the like. The storage device 203 stores various types of setting information input by the operator. The storage device 203 stores a data table 150 (refer to FIG. 7).

The timer 221 is electrically connected to the CPU 200. The CPU 200 controls the starting and terminating of time measurement by the timer 221. The timer 221 is adapted to output a timer value to the CPU 200. The key 228 is electrically connected to the CPU 200. The operator may use the key 228 when making various types of operation settings. The CPU 200 recognizes a state in which the key 228 is being pressed. Based on the recognized state of the key 228 being pressed, the CPU 200 stores information on the various types of operation settings in the storage device 203. A display driver 205 is electrically connected to the CPU 200. The display driver 205 is electrically connected to the liquid crystal display 222. The CPU 200 displays specified information on the liquid crystal display 222 through the display driver 205. A motor driver 206 is electrically connected to the CPU 200. The motor driver 206 is electrically connected to the first motor 91, the second motor 92, the third motor 93, and the fourth motor 94. The CPU 200 controls the first motor 91, the second motor 92, the third motor 93, and the fourth motor 94 through the motor driver 206. An air driver 207 is electrically connected to the CPU 200. The air driver 207 is electrically connected to the air cylinders 20 and 38. The CPU 200 controls the pressure of the air that is sent to the air cylinders 20 and 38 through the air driver 207. A heater driver 208 is electrically connected to the CPU 200. The heater driver 208 is electrically connected to the heaters 24, 25, 66, and 67. The CPU 200 controls the heat generation of the heaters 24, 25, 66, and 67 through the heater driver 208. A valve driver 209 is electrically connected to the CPU 200. The valve driver 209 is electrically connected to the valve 80. The CPU 200 controls the on-off switching of the valve 80 through the valve driver 209. The sensor 43 is electrically connected to the CPU 200. The sensor 43 transmits an on signal to the CPU 200 when the sensor 43 detects the detection plate 61 of the cam 65 (refer to FIG. 4).

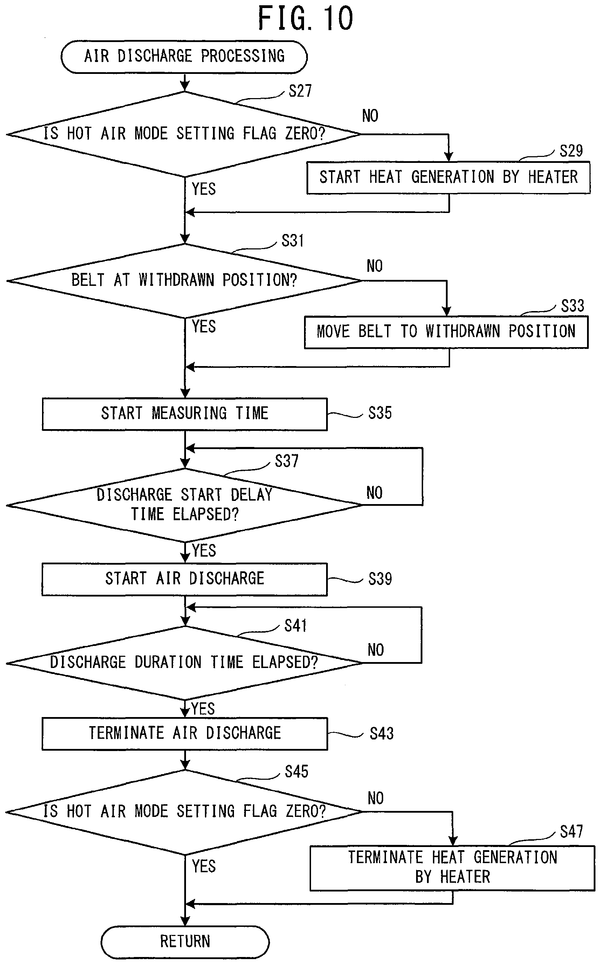

The data table 150 will be explained with reference to FIG. 7. The data table 150 is a table to which the CPU 200 refers when the CPU 200 performs air discharge processing (refer to FIG. 10). The data table 150 stores sets of discharge start delay times and discharge duration times in association with discharge patterns 1, 2, and 3 in the storage device 203. The discharge start delay time is the interval from the time when the belt 27 is moved from the clamping position to the spacing position until the time when the pipe members 115 start to discharge air. The discharge duration time is the interval from when the pipe members 115 start to discharge air until the air discharge is terminated. The data table 150 stores values XI, X2, and X3 as the discharge start delay times. The values XI, X2, and X3 respectively correspond to the discharge patterns 1, 2, and 3. The value XI may be 0.1 seconds, for example. The value X2 may be 0.3 seconds, for example. The value X3 may be 0.5 seconds, for example. The data table 150 stores values Y1, Y2, and Y3 as the discharge duration times. The values Y1, Y2, and Y3 respectively correspond to the discharge patterns 1, 2, and 3. The value Y1 may be 1 second, for example. The value Y2 may be 3 seconds, for example. The value Y3 may be 5 seconds, for example.

The cloth bond processing that the CPU 200 performs will be explained with reference to FIGS. 8 to 11. The cloth bond processing is processing in which the cloth bonding apparatus 1 feeds the upper cloth 31 and the lower cloth 32 and bonds the upper cloth 31 and the lower cloth 32 together with the adhesive 6. The cloth bonding apparatus 1 also performs the air discharge processing, in which the cloth bonding apparatus 1 discharges air onto the lower cloth 32 for which the feeding has stopped. The operator can perform the selecting of the air discharge pattern and the setting of a hot air mode by pressing the key 228. The hot air mode is a mode in which the cloth bonding apparatus 1 raises the temperature of the air discharged from the air discharge outlets 118 to a high temperature by causing the heater 67 to generate heat. In the explanation that follows, the cloth bond processing that is performed when the operator selects the discharge pattern 1 and does not set the hot air mode will be explained first.

The operator places the lower cloth 32 between the belt 27 and the nozzle 17 and between the belt 27 and the upper roller 18. The operator may place the upper cloth 31 on the top side of the nozzle 17 and between the upper roller 18 and the belt 27. When the operator turns on the power supply of the cloth bonding apparatus 1, the CPU 200 reads from the ROM 201 the program for performing the cloth bond processing, then performs the cloth bond processing.

The CPU 200 determines whether the selection of a discharge pattern is accepted (Step S11). The operator may select the discharge pattern 1 by pressing the key 228. Until the operator selects the discharge pattern 1 (NO at Step S11), the CPU 200 waits. When the operator selects the discharge pattern 1 (YES at Step S11), the CPU 200 refers to the data table 150 (refer to FIG. 7), reads the discharge start delay time XI and the discharge duration time Y1, and stores them in the RAM 202. The CPU 200 advances the processing to Step S13.

The CPU 200 determines whether the hot air mode is set (Step S13). By pressing the key 228, the operator may input a selection that does not set the hot air mode. When the selection that does not set the hot air mode is input (NO at Step S13), the CPU 200 sets a hot air mode setting flag in the RAM 202 to zero (Step S15), then advances the processing to Step S19.

The CPU 200 determines whether the belt 27 is at the clamping position (Step S19). The CPU 200 determines whether the belt 27 is at the clamping position based on a belt position flag. The belt position flag is stored in the RAM 202. When the belt 27 is at the clamping position, the belt position flag is set to zero. When the belt 27 is at the spacing position, the belt position flag is set to 1. When the belt position flag is set to zero, the CPU 200 determines that the belt 27 is at the clamping position (YES at Step S19) and advances the processing to Step S23. When the belt position flag is set to 1, the CPU 200 determines that the belt 27 is not at the clamping position (NO at Step S19) and moves the belt 27 to the clamping position (Step S21). The CPU 200 moves the belt 27 to the clamping position by controlling the motor driver 206 to operate the third motor 93. When the belt 27 is moved to the clamping position, the lower cloth 32 is held between the top portion of the belt 27 and the nozzle 17 (refer to FIG. 9). The CPU 200 sets the belt position flag in the RAM 202 to zero. After that, the CPU 200 performs adhesive discharge processing (Step S23).

The operation of the cloth bonding apparatus 1 in the adhesive discharge processing will be explained with reference to FIG. 9. The CPU 200 causes the heaters 24, 25, and 66 (refer to FIG. 2) to generate heat. The adhesive 6 in the interior of the reservoir 8 (refer to FIG. 2) and the interior of the pump 7 (refer to FIG. 2) reaches a high temperature and liquefies. The CPU 200 operates the first motor 91, the second motor 92, and the fourth motor 94. When the first motor 91 operates, the gear pump supplies the adhesive 6 to the nozzle 17. The nozzle 17 discharges the adhesive 6 from the plurality of the discharge outlets 17A (refer to FIG. 5). The adhesive 6 is attached to the top surface of the lower cloth 32. When the second motor 92 operates, the upper roller 18 is rotated counterclockwise in a right side view. When the fourth motor 94 operates, the belt 27 is moved clockwise in a right side view. The upper roller 18 and the belt 27 operate in a coordinated way to feed the upper cloth 31 and the lower cloth 32 to which the adhesive 6 is attached. On the downstream side of the nozzle 17 in the feed direction, the upper roller 18 and the belt 27 clamp and press the upper cloth 31 and the lower cloth 32 to which the adhesive 6 is attached, so that the upper cloth 31 and the lower cloth 32 are bonded to one another. After the upper cloth 31 and the lower cloth 32 are bonded together over a specified length in the feed direction, the CPU 200 stops the operations of the first motor 91, the second motor 92, and the fourth motor 94 and terminates the generating of heat by the heaters 24, 25, and 66. The CPU 200 thus terminates the adhesive discharge processing. As shown in FIG. 8, the CPU 200 performs the air discharge processing (Step S25).

The air discharge processing will be explained with reference to FIG. 10. The air discharge processing is processing that discharges air onto the lower cloth 32 for which the feeding is stopped, and moves the lower cloth 32 away from the nozzle 17. The CPU 200 refers to the RAM 202 and determines whether the hot air mode setting flag is set to zero (Step S27). When the hot air mode setting flag is set to zero (YES at Step S27), the CPU 200 determines whether the belt 27 is at the spacing position (Step S31). The CPU 200 determines whether the belt 27 is at the spacing position based on the belt position flag. When the belt 27 is at the spacing position (YES at Step S31), that is, when the belt position flag is set to 1, the CPU 200 advances the processing to Step S35. When the belt 27 is not at the spacing position (NO at Step S31), that is, when the belt position flag is set to zero, the CPU 200 moves the belt 27 to the spacing position (Step S33). The CPU 200 controls the motor driver 206 to operate the third motor 93 and thus the belt 27 is moved from the clamping position to the spacing position. The CPU 200 sets the belt position flag in the RAM 202 to 1.

The CPU 200 initializes the timer value of the timer 221 to zero, then starts time measurement by the timer 221 (Step S35). The CPU 200 determines whether the discharge start delay time has elapsed (Step S37). When the operator has selected the discharge pattern 1, the CPU 200 determines whether the timer value of the timer 221 indicates that the discharge start delay time XI (0.1 seconds) has elapsed. Until the timer value of the timer 221 indicates that the discharge start delay time XI has elapsed (NO at Step S37), the CPU 200 waits. When the timer value of the timer 221 indicates that the discharge start delay time XI has elapsed (YES at Step S37), the CPU 200 starts the discharge of air (Step S39). The CPU 200 controls the valve driver 209 to switch the valve 80 from off to on. The inlet 81 and the outlet 82 of the valve 80 are continuous with one another. The air compressor supplies air to the two pipe members 115 through the valve 80. As shown in FIG. 11, the air is discharged downward (in the direction of the arrow C) from the pipe member 115 that is on the upstream side of the plurality of the discharge outlets 17A (refer to FIG. 5) on the nozzle 17 in the feed direction. The air is discharged obliquely downward toward the front (in the direction of the arrow D) from the pipe member 115 that is on the downstream side of the plurality of the discharge outlets 17A in the feed direction.

When the belt 27, which holds the lower cloth 32 between the belt 27 and the nozzle 17, is moved from the clamping position to the spacing position (Step S33), there is a possibility that the lower cloth 32 is attached to the bottom face of the nozzle 17 on which some of the adhesive 6 remains. The lower cloth 32 tends to be attached to the nozzle 17 when the lower cloth 32 is a thin cloth or the like, for example. In such a case, the air discharged from the pipe members 115 pushes downward on the lower cloth 32 attached to the nozzle 17, so that the cloth bonding apparatus 1 can move the lower cloth 32 away from the nozzle 17. The air discharge outlets 118 are positioned close to the nozzle 17. Therefore, the air discharged by the pipe members 115 can readily push downward on the lower cloth 32 attached to the nozzle 17. The cloth bonding apparatus 1 can easily move the lower cloth 32 away from the nozzle 17. The nozzle 17 is at a high temperature due to the heat generation by the heater 66 in the adhesive discharge processing (Step S23). The separating of the lower cloth 32 from the high-temperature nozzle 17 can prevent the temperature of the adhesive 6 attached to the lower cloth 32 from increasing.

The front side (the upstream side in the feed direction) of the top portion of the belt 27 that is in the spacing position is separated from the nozzle 17. Air is discharged obliquely downward toward the front (the direction of the arrow D) from the pipe member 115 that is on the downstream side of the plurality of the discharge outlets 17A in the feed direction. When the air pushes downward on the lower cloth 32, a wrinkle may form in the lower cloth 32. Because air is discharged obliquely downward toward the front from the pipe member 115, the wrinkle tends to pass through the area between the top portion of the belt 27 and the nozzle 17 and move upstream in the feed direction. Therefore, the wrinkle tends not to be formed in the lower cloth 32.

As shown in FIG. 10, the CPU 200 determines whether the discharge duration time has elapsed (Step S41). The timer 221 starts measuring time after the belt 27 is moved to the spacing position. When the operator has selected the discharge pattern 1, the CPU 200 determines whether the timer value of the timer 221 indicates that a length of time has elapsed that is equal to the sum of XI (0.1 seconds) and Y1 (1 second) (XI + Y1 = 1.1 seconds). Until the timer value indicates that the sum (1.1 seconds) has elapsed (NO at Step S41), the CPU 200 waits. When the timer value of the timer 221 indicates that the sum (1.1 seconds) has elapsed (YES at Step S41), the CPU 200 terminates the discharge of air (Step S43). The CPU 200 controls the valve driver 209 to switch the valve 80 from on to off. The valve 80 closes off the internal flow passage. The pipe members 115 cease to discharge air. The CPU 200 refers to the RAM 202 and determines whether the hot air mode setting flag is set to zero (Step S45). When the hot air mode setting flag is set to zero (YES at Step S45), the CPU 200 terminates the air discharge processing and returns to the processing at Step S11 in the cloth bond processing (refer to FIG. 8). When the CPU 200 performs the adhesive discharge processing (Step S23, refer to FIG. 8) again, the cloth bonding apparatus 1 bonds together the upper cloth 31 and the lower cloth 32 to which the adhesive 6 is attached. When the power supply of the cloth bonding apparatus 1 is turned off, the cloth bond processing is terminated.

The cloth bond processing that is performed when the operator selects the discharge pattern 1 and sets the hot air mode will be explained with reference to FIGS. 8, 10, and 11. The explanations of the steps explained above will be simplified.

The operator may select the discharge pattern 1 (YES at Step S11) and set the hot air mode (YES at Step S13). The CPU 200 sets the hot air mode setting flag in the RAM 202 to 1 (Step S17). The CPU 200 performs the processing at Steps S19 to S25 that is described above. In the air discharge processing, the CPU 200 refers to the RAM 202 and determines whether the hot air mode setting flag is set to zero (Step S27). When the hot air mode setting flag is set to 1 (NO at Step S27), the CPU 200 controls the heater driver 208 to start heat generation by the heater 67 (Step S29). The CPU 200 advances the processing to Step S31. The CPU 200 performs the processing at Steps S31 to S45 that is described above. The generation of heat by the heater 67 (refer to FIG. 6) causes the two air discharge outlets 118 (refer to FIG. 5) to discharge high-temperature air, as shown in FIG. 11. The lower cloth 32 is moved away from the nozzle 17.

In the hot air mode, the air discharged from the two air discharge outlets 118 is at a high temperature. The cloth bonding apparatus 1 can inhibit a decrease in the temperature of the adhesive 6 attached to the lower cloth 32. Because the lower cloth 32 is at a high temperature, the viscosity of the adhesive 6 tends not to increase. The adhesive 6 can readily penetrate the lower cloth 32, even when the lower cloth 32 is waterproof. When the CPU 200 performs the cloth bond processing again, the cloth bonding apparatus 1 can bond the upper cloth 31 and the lower cloth 32 together firmly.

As shown in FIG. 10, the CPU 200 refers to the RAM 202 and determines whether the hot air mode setting flag is set to zero (Step S45). When the hot air mode setting flag is set to 1 (NO at Step S45), the CPU 200 controls the heater driver 208 to terminate heat generation by the heater 67 (Step S47). The CPU 200 terminates the air discharge processing and returns to the processing at Step S11 in the cloth bond processing (refer to FIG. 8).

Before the CPU 200 performs the cloth bond processing, the operator can modify the directions in which the air discharge mechanism 100 discharges air by rotating the pipe members 115 around their axes (in the directions of the arrows A in FIG. 3). By replacing the pipe members 115 with pipe members in which the opening widths are different from those of the air discharge outlets 118, the operator can modify the widths over which the air discharge mechanism 100 discharges air. By moving the pipe members 115 in the left-right direction (in the directions of the arrows B in FIG. 5), the operator can modify the positions, in the left-right direction, at which the air discharge outlets 118 discharge air. The operator can appropriately adjust the directions in which air is discharged, the widths over which the air is discharged, and the air discharge positions in left-right direction in accordance with the thickness, the softness, and the like of the lower cloth 32.

As explained above, the upper roller 18 and the belt 27 feed the lower cloth 32. The nozzle 17 discharges the adhesive 6. The adhesive 6 is attached to the lower cloth 32. The CPU 200, which performs the cloth bond processing, stops the feeding of the lower cloth 32 and moves the belt 27 from the clamping position to the spacing position. After that, air is discharged from the air discharge outlets 118. The air pushes the lower cloth 32 toward the belt 27. The lower cloth 32 for which the feeding is stopped is moved away from the nozzle 17. The cloth bonding apparatus 1 can reliably move the lower cloth 32, for which the feeding is stopped, away from the nozzle 17.

The cloth bonding apparatus 1 can discharge, onto the lower cloth 32 from the air discharge outlets 118, the air that flows through the flow passages 115A. The flow passages 115A are formed on the inner sides of the pipe members 115. The pipe members 115 can therefore be made compact. The pipe members 115, which are positioned in the vicinity of the nozzle 17, tend not to interfere with the feeding of the lower cloth 32. The cloth bonding apparatus 1 can perform stable feeding of the lower cloth 32.

By rotating the pipe members 115 around their axes, the operator can modify the orientations of the air discharge outlets 118 in accordance with the thickness, the softness, and the like of the lower cloth 32. The cloth bonding apparatus 1 can discharge air in directions that are appropriate for easily moving the lower cloth 32 away from the nozzle 17, in accordance with the type of the lower cloth 32. The cloth bonding apparatus 1 can more reliably move the lower cloth 32, for which the feeding is stopped, away from the nozzle 17.

The operator can easily modify the orientations of the individual air discharge outlets 118 simply by loosening the screws tightened into the front support portion 112 and the rear support portion 113 and rotating the respective pipe members 115 around their axes. The cloth bonding apparatus 1 can more easily modify the directions in which air is discharged.

The operator can move the individual discharge portions 116 in the left-right direction by loosening the screws tightened into the front support portion 112 and the rear support portion 113. The operator can modify the positions of the air discharge outlets 118 in the left-right direction. The operator can therefore adjust in the left-right direction the areas on the lower cloth 32 to which air is to be discharged. The cloth bonding apparatus 1 can discharge air at positions that are appropriate for easily moving the lower cloth 32 away from the nozzle 17, in accordance with the type of the lower cloth 32. The cloth bonding apparatus 1 can more reliably move the lower cloth 32, for which the feeding is stopped, away from the nozzle 17.

One of the two pipe members 115 is positioned on the downstream side of the discharge outlets 17A of the nozzle 17 in the feed direction. When the belt 27 is in the spacing position, the front side (the upstream side in the feed direction) of the top portion of the belt 27 can be separated from the nozzle 17. When the air discharged from the air discharge outlets 118 pushes the lower cloth 32 toward the belt 27, a wrinkle may form in the lower cloth 32. The wrinkle tends to pass over the top portion of the belt 27 and move upstream in the feed direction. A wrinkle in the lower cloth 32 tends not to be positioned between the nozzle 17 and the upper roller 18. The cloth bonding apparatus 1 can reduce the possibility of the formation of a wrinkle in the lower cloth 32 when the lower cloth 32 is held between the upper roller 18 and the nozzle 17 and the feeding is restarted.

The two pipe members 115 are respectively positioned on the upstream side and the downstream side of the discharge outlets 17A of the nozzle 17 in the feed direction. The flow volume of the air that the cloth bonding apparatus 1 discharges onto the lower cloth 32 can be greater than it would be if the pipe member 115 were provided on only one of the upstream side and the downstream side of the discharge outlets 17A of the nozzle 17 in the feed direction. The cloth bonding apparatus 1 can more reliably move the lower cloth 32, for which the feeding is stopped, away from the nozzle 17.

The air discharge outlets 118, which are formed in the discharge portions 116, are substantially rectangular, with their long axes extending in the left-right direction. In other words, the air discharge outlets 118 are substantially rectangular, with their long axes extending in the axial direction of the pipe members 115. In the manufacturing process for the pipe members 115, the air discharge outlets 118 can be formed easily in the peripheral wall portions. The cloth bonding apparatus 1 can simplify the manufacturing process for the pipe members 115.

The two air discharge outlets 118 are positioned close to the nozzle 17. The force of the air that pushes on the lower cloth 32 tends not to diminish. The air can push away the lower cloth 32 when the lower cloth 32 is attached to the nozzle 17. The cloth bonding apparatus 1 can more reliably move the lower cloth 32, for which the feeding is stopped, away from the nozzle 17.

When the CPU 200 determines that the belt 27 is at the spacing position (YES at Step S31), the CPU 200 switches the valve 80 from off to on. The air discharge outlets 118 start the discharge of air (Step S39). The air discharged from the air discharge outlets 118 pushes the lower cloth 32 toward the belt 27 that is in the spacing position. The cloth bonding apparatus 1 can more reliably move the lower cloth 32, for which the feeding is stopped, away from the nozzle 17.

The operator can select the discharge start delay time (Step S11). The cloth bonding apparatus 1 can regulate the time from when the belt 27 is moved to the spacing position until the air discharge from the air discharge outlets 118 is started. The cloth bonding apparatus 1 can start the discharge of air at a time that is appropriate for easily moving the lower cloth 32 away from the nozzle 17, in accordance with the thickness, the softness, and the like of the lower cloth 32. The cloth bonding apparatus 1 can more reliably move the lower cloth 32, for which the feeding is stopped, away from the nozzle 17.

The operator can select the discharge duration time (Step S11). The cloth bonding apparatus 1 can regulate the time during which the air discharge outlets 118 discharge air. The cloth bonding apparatus 1 can discharge air for a discharge duration time that is appropriate for easily moving the lower cloth 32 away from the nozzle 17, in accordance with the type of the lower cloth 32. The cloth bonding apparatus 1 can more reliably move the lower cloth 32, for which the feeding is stopped, away from the nozzle 17.

When the operator has set the hot air mode (YES at Step S13), the air discharge outlets 118 discharge high-temperature air heated by the heater 67 (Step S29) onto the lower cloth 32. The high-temperature air inhibits any decrease in the temperature of the adhesive 6 attached to the lower cloth 32. Because the adhesive 6 is at a high temperature, the viscosity of the adhesive 6 tends not to increase. When the lower cloth 32 is a waterproof fabric for outerwear or the like, the adhesive 6 tends not to penetrate the lower cloth 32. In this case, it is difficult to bond the upper cloth 31 and the lower cloth 32 together firmly, even if the CPU 200 performs the adhesive discharge processing (Step S23; refer to FIG. 8) again such that the upper roller 18 and the belt 27 press and feed the upper cloth 31 and the lower cloth 32 to which the adhesive 6 is attached. However, because the cloth bonding apparatus 1 inhibits any increase in the viscosity of the adhesive 6 attached to the lower cloth 32, the adhesive 6 can readily penetrate the waterproof lower cloth 32 to an appropriate degree. The cloth bonding apparatus 1 is able to bond the upper cloth 31 and the lower cloth 32 together firmly, even when the lower cloth 32 is waterproof.

In the explanation above, the upper roller 18 is equivalent to a first feed portion of the present invention. The belt 27 is equivalent to a second feed portion of the present invention. The air discharge mechanism 100 is equivalent to a discharge portion of the present invention. The air discharge outlet 118 is equivalent to a first discharge outlet of the present invention. The support member 110 is equivalent to a support portion of the present invention. The left-right direction is equivalent to a direction that intersects a feed direction of the present invention. The left-right direction is equivalent to a direction in which a nozzle extends of the present invention. The third motor 93 is equivalent to a moving portion of the present invention. The valve 80 is equivalent to a flow volume regulating portion of the present invention. The heater 67 is equivalent to a heating portion of the present invention. The CPU 200 that performs Step S23 is equivalent to a feed control portion of the present invention. The CPU 200 that performs Steps S39, S41, and S43 is equivalent to a discharge control portion of the present invention. The CPU 200 that performs Step S11 is equivalent to a time control portion of the present invention.

The present invention is not limited to the embodiment described above, and various types of modifications can be made. When the operator has set the hot air mode, high-temperature air may be discharged from the pipe members 115 when the CPU 200 performs the adhesive discharge processing (Step S23). In that case, the high-temperature air would warm the adhesive 6 attached to the lower cloth 32 that is moving downstream in the feed direction. The temperature of the adhesive 6 tends not to decrease, so that the viscosity of the adhesive 6 tends not to increase. The adhesive 6 can easily penetrate the lower cloth 32 that is waterproof. Even when the lower cloth 32 is waterproof, the upper roller 18 and the belt 27 can bond the upper cloth 31 and the lower cloth 32 together firmly.

It is acceptable for the pipe members 115 not to be able to rotate around their axes. It is acceptable for the pipe members 115 not to be able to move in the left-right direction. For example, the two pipe members 115 may be fixed to the front support portion 112 and the rear support portion 113, respectively. In that case, the two pipe members 115 discharge air from the air discharge outlets 118 in specified directions. It is acceptable for the air discharge outlets 118 of the pipe members 115 not to be disposed in positions that are close to the nozzle 17. For example, the air discharge outlets 118 may be disposed in positions separated from the nozzle 17. Even in that case, the air discharged from the pipe members 115 can move the lower cloth 32, for which the feeding is stopped, away from the nozzle 17.

The lower feed mechanism 12 may include a plurality of rotating rollers arrayed in the front-rear direction, instead of the belt 27. In that case, it would be sufficient if the rotating roller, among the plurality of the rotating rollers, that is positioned below the nozzle 17 can move between a position where the rotating roller holds the lower cloth 32 against the nozzle 17 and a position where the rotating roller is separated below from the nozzle 17. It is acceptable for the belt 27 not to be able to move between the clamping position and the spacing position. For example, the belt 27 may be fixed in the clamping position.

It is acceptable for the pipe members 115 not to discharge air after the belt 27 has moved to the spacing position and the discharge start delay time has elapsed. For example, the pipe members 115 may discharge air at the same time that the belt 27 starts to move from the clamping position toward the spacing position.

It is acceptable for the cloth bonding apparatus 1 not to store the data table 150. It is acceptable for the operator not to select the discharge pattern, for example. The pipe members 115 may discharge air for a fixed length of time after a specified length of time has elapsed after the belt 27 has moved to the spacing position.

It is acceptable for the cloth bonding apparatus 1 not to be able to set the hot air mode. In that case, the heater 67 may not be provided, and it may be acceptable for the pipe members 115 to discharge only room-temperature air. The air discharge mechanism 100 may discharge a gas other than air. For example, the air discharge mechanism 100 may discharge a gas such as an inert gas or the like.

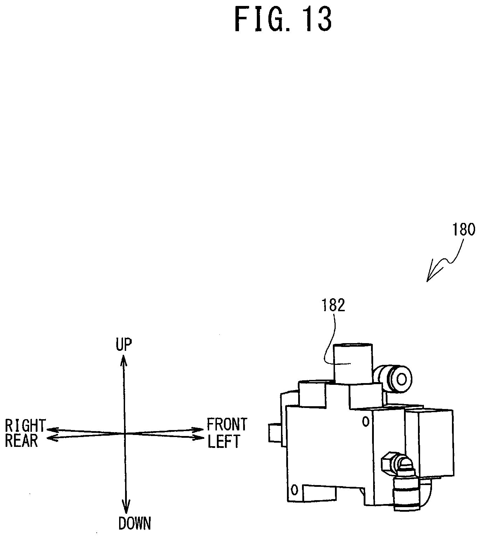

It is acceptable for the valve 80 (refer to FIG. 1) not to be an electromagnetic valve. For example, a manual valve 180 may be provided, as shown in FIG. 13. The valve 180 includes a rotatable knob 182. The valve 180 is continuous with the air compressor through pipework and is continuous with the two pipe members 115 through the supply pipe. The operator may check the internal pressure of the supply pipe using a pressure gauge and rotate the knob 182 of the valve 180. The rotating of the knob 182 increases and decreases the amount of opening in an internal flow passage of the valve 180. The operator can regulate the flow volume of the air supplied to each of the two pipe members 115 from the air compressor. The cloth bonding apparatus 1 can discharge air from the air discharge outlets 118 (refer to FIG. 5) at a flow volume that is suitable for easily moving the lower cloth 32 away from the nozzle 17, in accordance with the type of the lower cloth 32. The cloth bonding apparatus 1 can more reliably move the lower cloth 32 away from the nozzle 17. The valve 180 is equivalent to the flow volume regulating portion of the present invention.

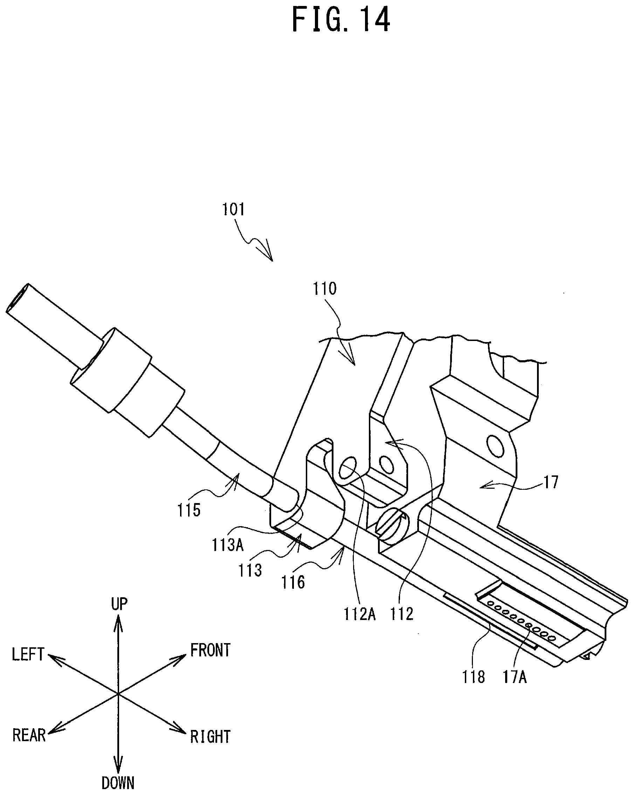

It is acceptable for the two discharge portions 116 not to be disposed on the upstream side and the downstream side, respectively, of the discharge outlets 17A of the nozzle 17 in the feed direction. The discharge portions 116 may be disposed on only one of the upstream side and the downstream side of the discharge outlets 17A of the nozzle 17 in the feed direction. FIG. 14 shows an air discharge mechanism 101 in a modified example. The pipe member 115 of the air discharge mechanism 101 is inserted into the through-hole 113A and extends substantially horizontally toward the right. The discharge portion 116 extends toward the right from the through-hole 113A. The discharge portion 116 is positioned on the downstream side of the discharge outlets 17A of the nozzle 17 in the feed direction. The lower cloth 32, for which the feeding is stopped, can be moved away from the nozzle 17 by the discharging of air obliquely downward toward the front by the pipe member 115. When the discharge portion 116 is provided only on the downstream side of the discharge outlets 17A of the nozzle 17 in the feed direction and discharges air to push the lower cloth 32 toward the belt 27, any wrinkle in the lower cloth 32 tends not to be positioned between the nozzle 17 and the upper roller 18. The air discharge mechanism 101 is equivalent to the discharge means of the present invention.

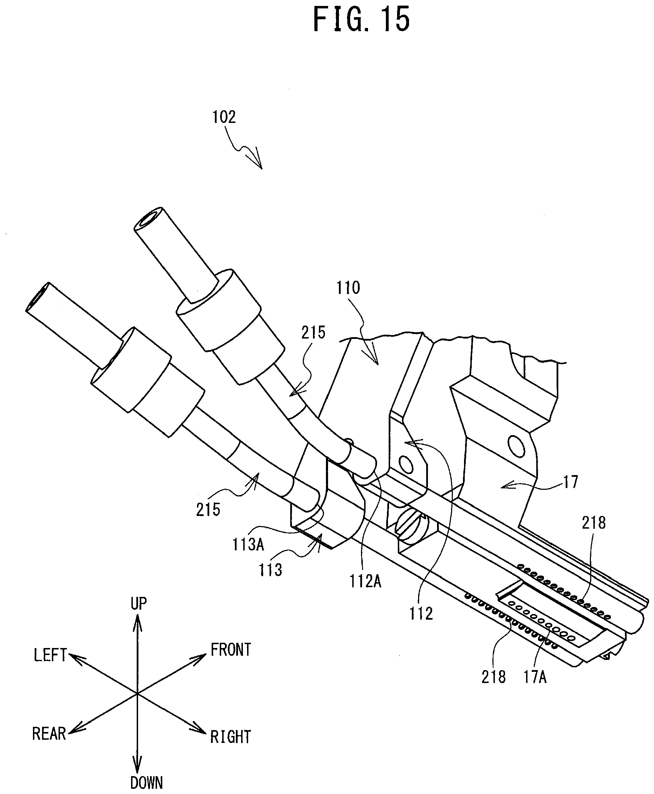

It is acceptable for the air discharge outlets 118 of the pipe members 115 not to be substantially rectangular with their long axes extending in the axial directions of the pipe members 115. FIG. 15 shows an air discharge mechanism 102 in a modified example. The air discharge mechanism 102 includes pipe members 215 instead of the pipe members 115. The two pipe members 215 are each provided with a plurality of air discharge outlets 218. The plurality of the air discharge outlets 218 are each circular and are arrayed in the axial direction of each of the pipe members 215. The plurality of the air discharge outlets 218 are continuous with the interior of the corresponding pipe members 215. The right ends of the interiors of the pipe members 215 are the downstream ends of the air flow passages. When the plurality of the air discharge outlets 218 discharge air, the pressure tends not to drop at the right ends of the interiors of the pipe members 215. The pressure in the interiors of the pipe members 215 tends to be uniform in the left-right direction. The flow volume of the air discharged from the plurality of the air discharge outlets 218 becomes substantially uniform along the axial directions of the pipe members 215. The air discharge mechanism 102 is equivalent to the discharge portion of the present invention.

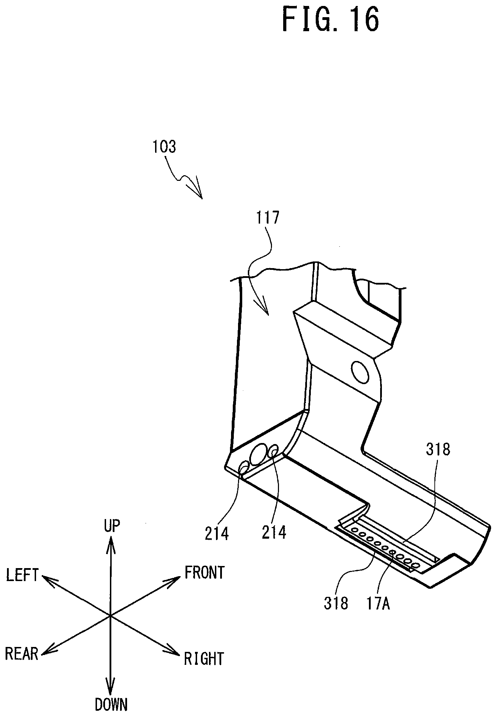

It is acceptable for the air discharge mechanism 100 not to include the pipe members 115. FIG. 16 shows an air discharge mechanism 103 in a modified example. The air discharge mechanism 103 includes two flow passages 214 and two air discharge outlets 318 instead of the support member 110 and the pipe members 115. The two flow passages 214 and the two air discharge outlets 318 are formed in a nozzle 117. The two flow passages 214 are formed in the interior of the nozzle 117. The two flow passages 214 are positioned in front of and to the rear of the plurality of the discharge outlets 17A of the nozzle 117. The flow passages 214 are continuous with the air compressor. The air compressor is equivalent to the supply means of the present invention. The air discharge outlets 318 are formed in the bottom face of the nozzle 117 and are substantially rectangular in a bottom view. The air discharge outlets 318 are continuous with the flow passages 214. The air discharge outlets 318 can discharge, onto the lower cloth 32 (refer to FIG. 9), the air that flows through the flow passages 214. The lengths of the air discharge outlets 31.8 in the left-right direction are opening widths that the air discharge outlets 318 open up in the nozzle 117. The pipe members 115 that discharge air are not needed, so that the lower cloth 32 does not contact with the pipe members 115. The upper roller 18 (refer to FIG. 3) and the belt 27 (refer to FIG. 3) can feed the lower cloth 32 smoothly. The air discharge mechanism 103 is equivalent to the discharge portion of the present invention.

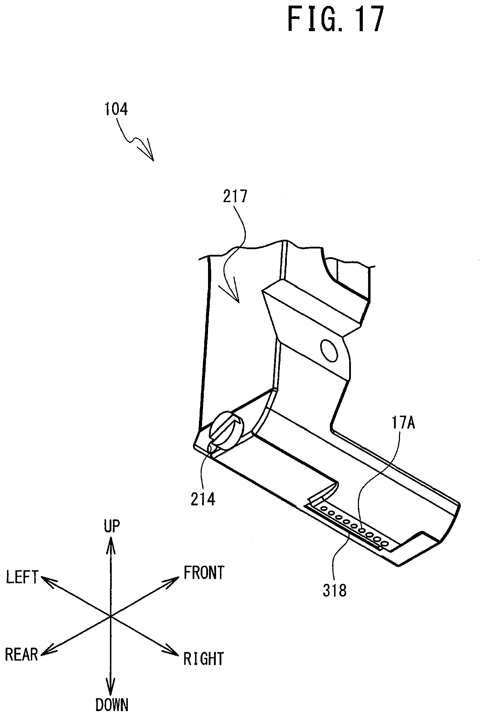

FIG. 17 shows an air discharge mechanism 104 in a modified example. A nozzle 217 is a modified example of the nozzle 117. The air discharge mechanism 104 may include the flow passage 214 only to the rear of the plurality of the discharge outlets 17A in the nozzle 217. The flow passage 214 may be provided only in front of the plurality of the discharge outlets 17A. The air discharge mechanism 104 is equivalent to the discharge means of the present invention. The air discharge outlets 318 are equivalent to a second discharge outlet of the present invention.

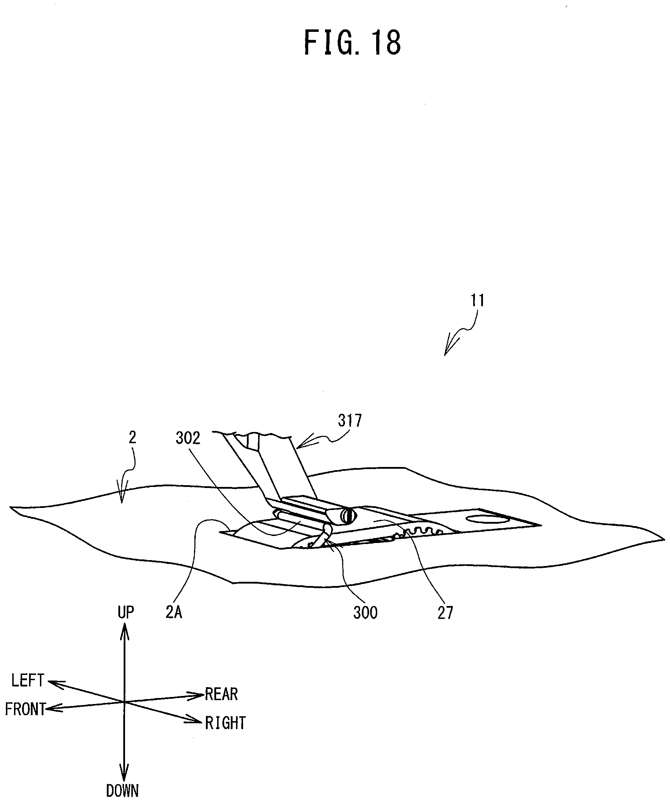

It is acceptable for the cloth bonding apparatus 1 not to discharge air in order to move the lower cloth 32 away from the nozzle 17. A cloth bonding apparatus 11 in a modified example, which is shown in FIG. 18, includes a nozzle 317 instead of the nozzle 17. The cloth bonding apparatus 11 includes a contact member 300 instead of the air discharge mechanism 100. The nozzle 317 is provided on the bottom end of the nozzle lever 15 (refer to FIG. 1), in the same manner as the nozzle 17. The contact member 300 is provided on the support arm 160 (refer to FIG. 4). The contact member 300 extends from the support arm 160 (refer to FIG. 4), through the belt opening 2A, to the top side of the base 2, then bends toward the left. The contact member 300 can be moved in conjunction with the belt 27. The contact member 300 includes a contact portion 302. The contact portion 302 is a portion, of the contact member 300, that extends in the left-right direction. The contact portion 302 is positioned on the opposite side of the belt 27 from the lower cloth 32 and is positioned upstream from the nozzle 317 in the feed direction.

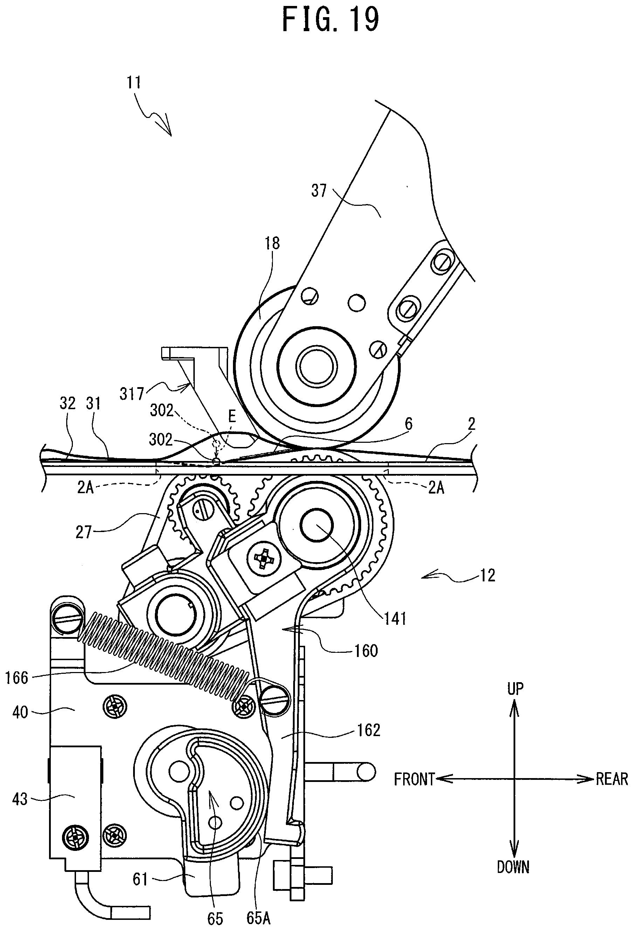

As shown in FIG. 19, when the CPU 200 has terminated the adhesive discharge processing (refer to FIG. 8) and the upper roller 18 and the belt 27 have stopped the feeding of the upper cloth 31 and the lower cloth 32, the belt 27 is moved from the clamping position to the spacing position (Step S33). At this time, in conjunction with the movement of the belt 27, the contact portion 302 contacts with the lower cloth 32 from above and pushes the lower cloth 32 downward (in the direction of an arrow E). The lower cloth 32 is separated below from the nozzle 317. The cloth bonding apparatus 11 can move the lower cloth 32, for which the feeding is stopped, away from the nozzle 317. FIG. 19 shows only the contact portion 302 of the contact member 300. The contact portion 302 is equivalent to a movable member of the present invention.

## Claims

1. A cloth bonding apparatus comprising:
a nozzle (17, 117, 217) that includes a discharge outlet (17A), the nozzle being adapted to discharge an adhesive (6) onto a lower cloth (32);
a first feed portion (18) provided on a downstream side of the nozzle in a feed direction of the lower cloth, the first feed portion being adapted to feed an upper cloth;
a second feed portion (27) provided on an opposite side of the lower cloth from the nozzle and the first feed portion, the second feed portion being opposed to the nozzle and the first feed portion, and the second feed portion being adapted to operate in coordination with the first feed portion to press and feed the upper cloth and the lower cloth to which the adhesive is attached; and
a feed control portion (200) adapted to control feeding of the upper cloth and the lower cloth by the first feed portion and the second feed portion,
**characterized by**
a discharge portion (100, 101, 102, 103, 104) provided on an opposite side of the lower cloth from the second feed portion, the discharge portion being coupled to a supply portion that is adapted to supply a gas, and the discharge portion being adapted to discharge, onto the lower cloth, the gas supplied by the supply portion.

2. The cloth bonding apparatus according to claim 1, wherein
the discharge portion is provided on at least one of an upstream side and a downstream side of the discharge outlet of the nozzle in the feed direction, and
the discharge portion includes a pipe member (115, 215) that includes a flow passage (115A) and a first discharge outlet (118, 218), the flow passage being adapted such that the gas supplied by the supply portion can flow through the flow passage, the first discharge outlet being connected to the flow passage, and the first discharge outlet being adapted to discharge the gas onto the lower cloth.

3. The cloth bonding apparatus according to claim 2, wherein
the first discharge outlet is formed in a peripheral wall portion of the pipe member,
the discharge portion includes a support portion (110) that supports the pipe member such that the pipe member can rotate around an axis of the pipe member, and
an orientation of an opening in the first discharge outlet is changed by rotating of the pipe member around the axis of the pipe member.

4. The cloth bonding apparatus according to claim 3, wherein
the nozzle extends in a direction that intersects the feed direction, and
the support portion supports the pipe member such that the pipe member can be moved parallel to a direction in which the nozzle extends.

5. The cloth bonding apparatus according to claim 4, wherein
the pipe member is provided on the downstream side of the discharge outlet of the nozzle in the feed direction.

6. The cloth bonding apparatus according to claim 4, wherein
the pipe member is provided on each of the upstream side and the downstream side of the discharge outlet of the nozzle in the feed direction.

7. The cloth bonding apparatus according to any one of claims 2 to 6, wherein
the first discharge outlet is a rectangular opening whose long axis extends in an axial direction of the pipe member.

8. The cloth bonding apparatus according to any one of claims 2 to 6, wherein
a plurality of the first discharge outlets are arrayed in an axial direction of the pipe member, each of the plurality of the first discharge outlets is a circular opening.

9. The cloth bonding apparatus according to claim 1, wherein
the discharge portion includes:
a flow passage (214) provided in an interior of the nozzle, the flow passage being adapted such that the gas supplied by the supply portion can flow through the flow passage; and
a second discharge outlet (318) provided in the nozzle, the second discharge outlet being adapted to discharge, onto the lower cloth, the gas that flows through the flow passage.

10. The cloth bonding apparatus according to any one of claims 1 to 9, further comprising:
a moving portion (93) adapted to move the second feed portion between a clamping position and a spacing position, the clamping position being a position where the nozzle and the second feed portion hold the lower cloth between the nozzle and the second feed portion, and the spacing position being a position where the second feed portion is separated from the nozzle; and
a discharge control portion (200) adapted to control the discharge portion to discharge the gas onto the lower cloth after the feed control portion causes the feeding of the lower cloth to stop,
wherein
the discharge control portion is adapted to control the discharge portion to discharge the gas onto the lower cloth when the moving portion moves the second feed portion from the clamping position to the spacing position.

11. The cloth bonding apparatus according to claim 10, further comprising:
a time control portion (200) adapted to set a discharge start delay time and a discharge duration time, the discharge start delay time being a length of time from when the moving portion finishes moving the second feed portion from the clamping position to the spacing position until the discharge control portion starts discharge of the gas by the discharge portion, and the discharge duration time being a length of time from when the discharge portion starts to discharge the gas until the discharge portion stops discharging the gas.

12. The cloth bonding apparatus according to any one of claims 1 to 11, wherein
the discharge portion includes a flow volume regulating portion (180) that is adapted to regulate flow volume of the gas to be discharged.

13. The cloth bonding apparatus according to any one of claims 1 to 12, wherein
the discharge portion includes a heating portion (67) that is adapted to heat the gas to be discharged.

14. A cloth bonding apparatus comprising:
a nozzle (317) adapted to discharge an adhesive (6) onto a lower cloth (32);
a first feed portion (18) provided on a downstream side of the nozzle in a feed direction of the lower cloth;
a second feed portion (27) provided on an opposite side of the lower cloth from the nozzle and the first feed portion, the second feed portion being opposed to the nozzle and the first feed portion, and the second feed portion being adapted to operate in coordination with the first feed portion to feed an upper cloth and the lower cloth to which the adhesive is attached; and
a moving portion (93) adapted to move the second feed portion between a clamping position and a spacing position, the clamping position being a position where the nozzle and the second feed portion hold the lower cloth between the nozzle and the second feed portion, and the spacing position being a position where the second feed portion is separated from the nozzle,
**characterized by**
a movable member (302) provided on an opposite side of the lower cloth from the second feed portion, the movable member being adapted to move in conjunction with moving of the second feed portion by the moving portion,
wherein
the lower cloth is moved away from the nozzle by the movable member when the second feed portion is moved from the clamping position to the spacing position.

## Patentansprüche

1. Vorrichtung zum Verbinden von Textilien, aufweisend:
eine Düse (17, 117, 217) die eine Ausgabeöffnung (17A) einschließt, wobei die Düse angepasst ist, ein Klebemittel (6) auf ein unteres Gewebe (32) auszugeben;
einen ersten Vorschubabschnitt (18) der auf der stromabwärts gerichteten Seite der Düse in einer Vorschubrichtung des unteren Gewebes angeordnet ist, wobei der erste Vorschubabschnitt angepasst ist, um ein oberes Gewebe vorzuschieben;
ein zweiter Vorschubabschnitt (27) der auf einer entgegengesetzten Seite des unteren Gewebes von der Düse und dem ersten Vorschubabschnitt angeordnet ist, wobei der zweite Vorschubabschnitt entgegengesetzt zu der Düse und dem ersten Vorschubabschnitt ist und der zweite Vorschubabschnitt angepasst ist, um in Abstimmung mit dem ersten Vorschubabschnitt zu arbeiten, um das obere Gewebe und das untere Gewebe, an dem das Klebemittel aufgebracht ist, zu pressen und vorzuschieben; und
einen Vorschubsteuerabschnitt (200), der angepasst ist, um den Vorschub des oberen Gewebes und des unteren Gewebes durch den ersten Vorschubabschnitt und den zweiten Vorschubabschnitt zu steuern,
**dadurch gekennzeichnet, dass**
ein Ausgabeabschnitt (100, 101, 102, 103, 104) auf der entgegengesetzten Seite des unteren Gewebes von dem zweiten Vorschubabschnitt vorgesehen ist, wobei der Ausgabeabschnitt an einen Zufuhrabschnitt gekoppelt ist, der angepasst ist, um ein Gas zuzuführen, und der Ausgabeabschnitt angepasst ist, um das durch den Zufuhrabschnitt zugeführte Gas auf das untere Gewebe auszugeben.

2. Die Vorrichtung zum Verbinden von Textilien nach Anspruch 1, wobei
der Ausgabeabschnitt auf wenigstens einer stromaufwärts oder stromabwärts gelegenen Seite der Ausgabeöffnung der Düse in der Vorschubrichtung angeordnet ist, und
der Ausgabeabschnitt ein Rohrelement (115, 215) umfasst, das einen Strömungskanal (115A) umfasst und eine erste Ausgabeöffnung (118, 218), wobei der Strömungskanal so angepasst ist, dass das Gas, das durch den Zufuhrabschnitt bereitgestellt wird, durch den Strömungskanal strömen kann, wobei die erste Ausgabeöffnung mit dem Strömungskanal verbunden ist und die erste Ausgabeöffnung angepasst ist, um das Gas auf das untere Gewebe auszugeben.

3. Die Vorrichtung zum Verbinden von Textilien nach Anspruch 2, wobei
die erste Ausgabeöffnung in einem peripheren Wandabschnitt des Rohrelements ausgebildet ist und der Ausgabeabschnitt einen Unterstützungsabschnitt (110) umfasst, der das Rohrelement so unterstützt, dass das Rohrelement um eine Achse des Rohrelements rotieren kann, und
eine Orientierung einer Öffnung in der ersten Ausgabeöffnung durch eine Rotation des Rohrelements um eine Achse des Rohrelements geändert wird.

4. Die Vorrichtung zum Verbinden von Textilien nach Anspruch 3, wobei
die Düse sich in eine Richtung erstreckt, die die Vorschubrichtung schneidet, und der Unterstützungsabschnitt das Rohrelement so unterstützt, dass das Rohrelement parallel zu der Richtung bewegt werden kann, in die sich die Düse erstreckt.

5. Die Vorrichtung zum Verbinden von Textilien nach Anspruch 4, wobei
das Rohrelement auf der stromabwärts gerichteten Seite der Ausgabeöffnung der Düse in der Vorschubrichtung angeordnet ist.

6. Die Vorrichtung zum Verbinden von Textilien nach Anspruch 4, wobei
das Rohrelement auf jeder der stromaufwärts gerichteten Seite und der stromabwärts gerichteten Seite der Ausgabeöffnung der Düse in der Vorschubrichtung angeordnet ist.

7. Die Vorrichtung zum Verbinden von Textilien nach einem der Ansprüche 2 bis 6, wobei
die erste Ausgabeöffnung eine rechtwinklige Öffnung ist, deren lange Achse sich in axialer Richtung des Rohrelements erstreckt.

8. Die Vorrichtung zum Verbinden von Textilien nach einem der Ansprüche 2 bis 6, wobei
eine Vielzahl an ersten Ausgabeöffnungen in einer axialen Richtung des Rohrelements angeordnet ist, wobei jede der Vielzahl an ersten Ausgabeöffnungen eine kreisförmige Öffnung ist.

9. Die Vorrichtung zum Verbinden von Textilien nach Anspruch 1, wobei der Ausgabeabschnitt umfasst:
einen Strömungskanal (214) der in einem Inneren der Düse angeordnet ist, wobei der Strömungskanal so angepasst ist, dass das durch den Zufuhrabschnitt zugeführte Gas durch den Strömungskanal strömen kann; und
eine zweite Ausgabeöffnung (318) die in der Düse angeordnet ist, wobei die zweite Ausgabeöffnung so angepasst ist, dass sie das Gas, das durch den Strömungskanal strömt, auf das untere Gewebe ausgibt.

10. Die Vorrichtung zum Verbinden von Textilien nach einem der Ansprüche 1 bis 9, weiterhin aufweisend:
einen Bewegungsabschnitt (93), der angepasst ist, um den zweiten Vorschubabschnitt zwischen einer Klemmposition und Abstandsposition zu bewegen, wobei die Klemmposition eine Position ist, in der die Düse und der zweite Vorschubabschnitt das untere Gewebe zwischen der Düse und dem zweiten Vorschubabschnitt halten, und die Abstandsposition eine Position ist, in der der zweite Vorschubabschnitt von der Düse getrennt ist; und
einen Ausgabesteuerabschnitt (200), der angepasst ist, um zu steuern, dass der Ausgabeabschnitt das Gas auf das untere Gewebe ausgibt, nachdem der Vorschubsteuerabschnitt den Vorschub des unteren Gewebes gestoppt hat,
wobei
der Ausgabesteuerabschnitt angepasst ist, um zu steuern, dass der Ausgabeabschnitt das Gas auf das untere Gewebe ausgibt, wenn der Bewegungsabschnitt den zweiten Vorschubabschnitt aus der Klemmposition in die Abstandsposition bewegt.

11. Die Vorrichtung zum Verbinden von Textilien nach Anspruch 10, weiterhin umfassend:
einen Zeitsteuerabschnitt (200), der angepasst ist, um eine Ausgabestartverzögerungszeit und eine Zeit für die Ausgabedauer festzulegen, wobei die Ausgabestartverzögerungszeit eine Zeitspanne von dem Zeitpunkt ist, ab dem der Bewegungsabschnitt aufhört, den zweiten Vorschubabschnitt aus der Klemmposition in die Abstandsposition zu bewegen, bis zu dem Zeitpunkt, an dem der Ausgabesteuerabschnitt beginnt, das Gas durch den Ausgabeabschnitt auszugeben, und die Zeit für die Ausgabedauer eine Zeitspanne umfasst von dem Zeitpunkt, wenn der Ausgabeabschnitt beginnt, das Gas auszugeben, bis zu dem Zeitpunkt, an dem der Ausgabeabschnitt aufhört, Gas auszugeben.

12. Die Vorrichtung zum Verbinden von Textilien nach einem der Ansprüche 1 bis 11, wobei
der Ausgabeabschnitt einen Volumenstromregulierungsabschnitt (180) umfasst, der angepasst ist, um den Volumenstrom des Gases, das ausgespeist werden soll, zu regulieren.

13. Die Vorrichtung zum Verbinden von Textilien, nach einem der Ansprüche 1 bis 12, wobei
der Ausgabeabschnitt einen Heizabschnitt (67) einschließt, der angepasst ist, um das Gas, das ausgegeben werden soll, zu erhitzen.

14. Eine Vorrichtung zum Verbinden von Textilien, aufweisend:
eine Düse (317) die angepasst ist, um ein Klebemittel (6) auf ein unteres Gewebe (32) auszugeben;
einen ersten Vorschubabschnitt (18), der auf einer stromabwärts gerichteten Seite der Düse in einer Vorschubrichtung des unteren Gewebes angeordnet ist;
einen zweiten Vorschubabschnitt (27), der auf einer entgegengesetzten Seite des unteren Gewebes von der Düse und dem ersten Vorschubabschnitt angeordnet ist, wobei der zweite Vorschubabschnitt der Düse und dem ersten Vorschubabschnitt gegenübersteht und der zweite Vorschubabschnitt angepasst ist, um in Abstimmung mit dem ersten Vorschubabschnitt zu arbeiten, um ein oberes Gewebe und das untere Gewebe, auf dem das Klebemittel aufgebracht ist, vorzuschieben; und
einen Bewegungsabschnitt (93), der angepasst ist, um den zweiten Vorschubabschnitt zwischen einer Klemmposition und einer Abstandsposition zu bewegen, wobei die Klemmposition eine Position ist, in der die Düse und der zweite Vorschubabschnitt das untere Gewebe zwischen der Düse und dem zweiten Vorschubabschnitt halten, und die Abstandsposition eine Position ist, in der der zweite Vorschubabschnitt von der Düse getrennt ist,
**gekennzeichnet durch**
ein bewegliches Element (302), das auf der entgegengesetzten Seite des unteren Gewebes von dem zweiten Vorschubabschnitt angeordnet ist, wobei das bewegliche Element angepasst ist, sich zusammen mit der Bewegung des zweiten Vorschubabschnitts durch den Bewegungsabschnitt zu bewegen,
wobei
das untere Gewebe durch das bewegliche Element von der Düse wegbewegt wird, wenn der zweite Vorschubabschnitt aus der Klemmposition in die Abstandsposition bewegt wird.

## Revendications

1. Appareil de liaison de tissus comprenant :
une buse (17, 117, 217) qui comporte un orifice de sortie de déversement (17A), la buse étant adaptée pour déverser un adhésif (6) sur un tissu inférieur (32) ;
une première portion de fourniture (18) prévue sur un côté aval de la buse dans une direction de fourniture du tissu inférieur, la première portion de fourniture étant adaptée pour fournir un tissu supérieur ;
une seconde portion de fourniture (27) prévue sur un côté opposé du tissu inférieur par rapport à la buse et à la première portion de fourniture, la seconde portion de fourniture étant opposée à la buse et à la première portion de fourniture, et la seconde portion de fourniture étant adaptée pour fonctionner en coordination avec la première portion de fourniture pour presser et fournir le tissu supérieur et le tissu inférieur auquel l'adhésif est fixé ; et
une portion de commande de fourniture (200) adaptée pour commander la fourniture du tissu supérieur et du tissu inférieur par la première portion de fourniture et la seconde portion de fourniture,
**caractérisé par**
une portion de déversement (100, 101, 102, 103, 104) prévue sur un côté opposé du tissu inférieur par rapport à la seconde portion de fourniture, la portion de déversement étant accouplée à une portion d'approvisionnement qui est adaptée pour approvisionner un gaz, et la portion de déversement étant adaptée pour déverser, sur le tissu inférieur, le gaz approvisionné par la portion d'approvisionnement.

2. Appareil de liaison de tissus selon la revendication 1, dans lequel
la portion de déversement est prévue sur au moins l'un d'un côté amont et d'un côté aval de l'orifice de sortie de déversement de la buse dans la direction de fourniture, et
la portion de déversement comporte un organe tuyau (115, 215) qui comporte un passage d'écoulement (115A) et un premier orifice de sortie de déversement (118, 218), le passage d'écoulement étant adapté de sorte que le gaz approvisionné par la portion d'approvisionnement puisse s'écouler à travers le passage d'écoulement, le premier orifice de sortie de déversement étant raccordé au passage d'écoulement, et le premier orifice de sortie de déversement étant adapté pour déverser le gaz sur le tissu inférieur.

3. Appareil de liaison de tissus selon la revendication 2, dans lequel
le premier orifice de sortie de déversement est formé dans une portion de paroi périphérique de l'organe tuyau,
la portion de déversement comporte une portion de support (110) qui supporte l'organe tuyau de sorte que l'organe tuyau puisse tourner autour d'un axe de l'organe tuyau, et
une orientation d'une ouverture dans le premier orifice de sortie de déversement est changée par rotation de l'organe tuyau autour de l'axe de l'organe tuyau.

4. Appareil de liaison de tissus selon la revendication 3, dans lequel
la buse s'étend dans une direction qui coupe la direction de fourniture, et
la portion de support supporte l'organe tuyau de sorte que l'organe tuyau puisse être déplacé parallèle à une direction dans laquelle la buse s'étend.

5. Appareil de liaison de tissus selon la revendication 4, dans lequel
l'organe tuyau est prévu sur le côté aval de l'orifice de sortie de déversement de la buse dans la direction de fourniture.

6. Appareil de liaison de tissus selon la revendication 4, dans lequel
l'organe tuyau est prévu sur chacun du côté amont et du côté aval de l'orifice de sortie de déversement de la buse dans la direction de fourniture.

7. Appareil de liaison de tissus selon l'une quelconque des revendications 2 à 6, dans lequel
le premier orifice de sortie de déversement est une ouverture rectangulaire dont l'axe long s'étend dans une direction axiale de l'organe tuyau.

8. Appareil de liaison de tissus selon l'une quelconque des revendications 2 à 6, dans lequel
une pluralité de premiers orifices de sortie de déversement sont agencés dans une direction axiale de l'organe tuyau, chacun de la pluralité de premiers orifices de sortie de déversement est une ouverture circulaire.

9. Appareil de liaison de tissus selon la revendication 1, dans lequel
la portion de déversement comporte :
un passage d'écoulement (214) prévu dans un intérieur de la buse, le passage d'écoulement étant adapté de sorte que le gaz approvisionné par la portion d'approvisionnement puisse s'écouler à travers le passage d'écoulement ; et
un second orifice de sortie de déversement (318) prévu dans la buse, le second orifice de sortie de déversement étant adapté pour déverser, sur le tissu inférieur, le gaz qui s'écoule à travers le passage d'écoulement.

10. Appareil de liaison de tissus selon l'une quelconque des revendications 1 à 9, comprenant en outre :
une portion de déplacement (93) adaptée pour déplacer la seconde portion de fourniture entre une position de serrage et une position d'espacement, la position de serrage étant une position où la buse et la seconde portion de fourniture maintiennent le tissu inférieur entre la buse et la seconde portion de fourniture, et la position d'espacement étant une position où la seconde portion de fourniture est séparée de la buse ; et
une portion de commande de déversement (200) adaptée pour commander la portion de déversement pour déverser le gaz sur le tissu inférieur après que la portion de commande de fourniture provoque l'arrêt de la fourniture du tissu inférieur,
dans lequel
la portion de commande de déversement est adaptée pour commander la portion de déversement pour déverser le gaz sur le tissu inférieur lorsque la portion de déplacement déplace la seconde portion de fourniture de la position de serrage à la position d'espacement.

11. Appareil de liaison de tissus selon la revendication 10, comprenant en outre :
une portion de commande de temps (200) adaptée pour régler un temps de retard de début de déversement et un temps de durée de déversement, le temps de retard de début de déversement étant une longueur de temps à partir du moment où la portion de déplacement finit de déplacer la seconde portion de fourniture de la position de serrage à la position d'espacement jusqu'à ce que la portion de commande de déversement débute le déversement du gaz par la portion de déversement, et le temps de durée de déversement étant une longueur de temps à partir du moment où la portion de déversement débute le déversement du gaz jusqu'à ce que la portion de déversement arrête de déverser le gaz.

12. Appareil de liaison de tissus selon l'une quelconque des revendications 1 à 11, dans lequel
la portion de déversement comporte une portion de régulation de volume d'écoulement (180) qui est adaptée pour réguler un volume d'écoulement du gaz à déverser.

13. Appareil de liaison de tissus selon l'une quelconque des revendications 1 à 12, dans lequel
la portion de déversement comporte une portion de chauffage (67) qui est adaptée pour chauffer le gaz à déverser.

14. Appareil de liaison de tissus comprenant :
une buse (317) adaptée pour déverser un adhésif (6) sur un tissu inférieur (32) ;
une première portion de fourniture (18) prévue sur un côté aval de la buse dans une direction de fourniture du tissu inférieur ;
une seconde portion de fourniture (27) prévue sur un côté opposé du tissu inférieur par rapport à la buse et à la première portion de fourniture, la seconde portion de fourniture étant opposée à la buse et à la première portion de fourniture, et la seconde portion de fourniture étant adaptée pour fonctionner en coordination avec la première portion de fourniture pour fournir un tissu supérieur et le tissu inférieur auquel l'adhésif est fixé ; et
une portion de déplacement (93) adaptée pour déplacer la seconde portion de fourniture entre une position de serrage et une position d'espacement, la position de serrage étant une position où la buse et la seconde portion de fourniture maintiennent le tissu inférieur entre la buse et la seconde portion de fourniture, et la position d'espacement étant une position où la seconde portion de fourniture est séparée de la buse,
**caractérisé par**
un organe mobile (302) prévu sur un côté opposé du tissu inférieur par rapport à la seconde portion de fourniture, l'organe mobile étant adapté pour se déplacer conjointement au déplacement de la seconde portion de fourniture par la portion de déplacement,
dans lequel
le tissu inférieur est éloigné de la buse par l'organe mobile lorsque la seconde portion de fourniture est déplacée de la position de serrage à la position d'espacement.
